# EUROPEAN PATENT SPECIFICATION

(11) **EP 4 239 999 B1**
(45) Date of publication and mention of the grant of the patent: **11.06.2025**
(21) Application number: 20959919.0
(22) Date of filing: 02.11.2020
(51) Int. Cl.: H04N 23/617, H04N 23/661

(54) **IMAGE CAPTURE DEVICE, IMAGE QUALITY CONVERTING DEVICE, AND IMAGE QUALITY CONVERTING SYSTEM**
BILDERFASSUNGSVORRICHTUNG, BILDQUALITÄTSUMWANDLUNGSVORRICHTUNG UND BILDQUALITÄTSUMWANDLUNGSSYSTEM
DISPOSITIF DE CAPTURE D'IMAGE, DISPOSITIF DE CONVERSION DE QUALITÉ D'IMAGE ET SYSTÈME DE CONVERSION DE QUALITÉ D'IMAGE

(43) Date of publication of application: 06.09.2023
(73) Proprietor: MITSUBISHI ELECTRIC CORPORATION, Chiyoda-ku Tokyo 100-8310 (JP)
(72) Inventor: SUZUKI, Hidemichi, Tokyo 100-8310 (JP); YAMASHITA, Makoto, Tokyo 100-8310 (JP)
(74) Representative: Mewburn Ellis LLP
(86) International application number: PCT/JP2020/041033
(87) International publication number: WO 2022/091404

(56) References cited:
- WO-A1-2020/170486
- JP-A- 2008 042 462
- JP-A- 2010 252 276
- JP-A- H05 244 553
- US-B1- 10 200 599

## Description

### TECHNICAL FIELD

The present disclosure relates to an image capturing device, an image quality conversion device and an image quality conversion system.

### BACKGROUND ART

Conventionally, when optimizing image quality, parameters set to a Complementary Metal Oxide Semiconductor (CMOS) sensor in a camera, parameters set to various types of Large Scale Integration (LSI), parameters used when executing image processing specific to a product and encoding, and so forth are changed manually. After changing the parameters, the user judges whether the image quality is optimum or not by means of a visual check. In order to execute such work, expertise is necessary. Therefore, there has been proposed an image processing device that executes image quality adjustment (see Patent Reference 1). Further, there has been proposed an image processing device that adjusts texture of an input image (see Patent Reference 2).

Furthermore, the number of man-hours necessary for the work increases since the optimum image quality changes due to a change in the image capturing environment such as a change in sunshine. Therefore, there has been proposed a technology for reducing the number of man-hours (see Patent Reference 3).

### PRIOR ART REFERENCE

### PATENT REFERENCE

Patent Reference 1: Japanese Patent Application Publication No. 2012-191641
Patent Reference 2: WO 2019/054024
Patent Reference 3: Japanese Patent Application Publication No. 2011-71796
Patent Reference 4: US 10200599 discloses image capture setting determination in devices having access to multiple cameras, and more particularly a device includes a processor coupled to a first camera and a second camera. A processor is configured to cause the first camera to capture a first image frame and cause the second camera to capture a second image frame, the second image frame being captured after the first image frame. The processor is also configured to determine an image capture setting for the first camera based on the second image frame. In some aspects, the device can include the first camera and/or the second camera. In some aspects, the processor can be configured to cause the first camera to capture a third image frame based on the determined image captured setting, which can include, for example, an exposure control setting, a white balance setting, and/or a focal distance setting.
Patent Reference 5: WO 2020/170486 discloses an image processing device, image processing method and image processing program
Patent Reference 6: JPH05244553 discloses a picture transmission system, picture processing unit, and terminal equipment

### SUMMARY OF THE INVENTION

### PROBLEM TO BE SOLVED BY THE INVENTION

For example, the Patent Reference 1 proposes a technology for adjusting the image quality of an image that has been generated by a certain camera. However, when adjusting the image quality of an image generated by a different camera to image quality equivalent to the image quality of the image generated by the certain camera, the aforementioned technology cannot be used. Thus, to realize the equivalent image quality, a user having expertise needs to perform work on a device such as the different camera as conventionally done. The work performed by the user increases the load on the user.

An object of the present disclosure is to reduce the load on the user.

### MEANS FOR SOLVING THE PROBLEM

An image capturing device according to an aspect of the present disclosure is provided. The image capturing device is as set forth in claim 1, an image quality conversion device is set forth in claim 8 and an image quality conversion system is set forth in claim 10.

### EFFECT OF THE INVENTION

According to the present disclosure, the load on the user can be reduced.

### BRIEF DESCRIPTION OF THE DRAWINGS

Fig. 1 is a diagram showing an example of an image quality conversion system in a first embodiment.
Fig. 2 is a diagram showing hardware included in a camera in the first embodiment.
Fig. 3 is a diagram showing functional blocks included in the camera in the first embodiment.
Fig. 4 is a flowchart (No. 1) showing an example of a process executed in an adjustment mode in the first embodiment.
Fig. 5 is a flowchart (No. 2) showing the example of the process executed in the adjustment mode in the first embodiment.
Fig. 6 is a flowchart showing an example of a process executed in a normal mode in the first embodiment.
Fig. 7 is a diagram showing an example of an image quality conversion system in a second embodiment.
Fig. 8 is a diagram showing hardware included in an image quality conversion device in the second embodiment.
Fig. 9 is a diagram showing functional blocks included in the image quality conversion device in the second embodiment.
Fig. 10 is a flowchart (No. 1) showing an example of a process executed in the adjustment mode in the second embodiment.
Fig. 11 is a flowchart (No. 2) showing the example of the process executed in the adjustment mode in the second embodiment.
Fig. 12 is a flowchart showing an example of a process executed in the normal mode in the second embodiment.
Fig. 13 is a diagram showing an example of an image quality conversion system in a third embodiment.
Fig. 14 is a diagram showing functional blocks included in a camera in the third embodiment.
Fig. 15 is a diagram showing functional blocks included in an information processing device in the third embodiment.
Fig. 16 is a sequence diagram showing an example of a process executed in the image quality conversion system in the third embodiment.

### MODE FOR CARRYING OUT THE INVENTION

Embodiments will be described below with reference to the drawings. The following embodiments are just examples and a variety of modifications are possible within the scope of the invention as defined by the claims.

### First Embodiment

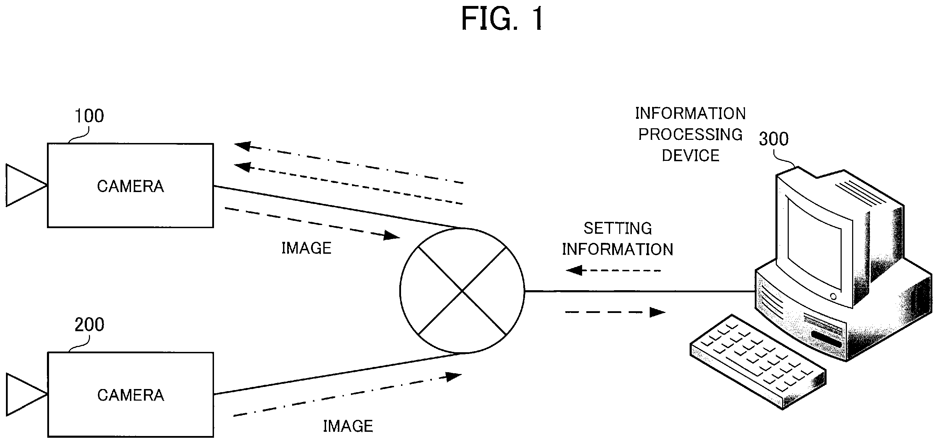

Fig. 1 is a diagram showing an example of an image quality conversion system in a first embodiment. The image quality conversion system includes a camera 100, a camera 200 and an information processing device 300. The camera 100, the camera 200 and the information processing device 300 are connected via a network.

The camera 100 is a monitoring camera, for example. The camera 100 has an adjustment mode and a normal mode. In the adjustment mode, parameters for realizing image quality equivalent to the image quality of an image acquired from the camera 200 are identified. In the normal mode, the identified parameters are set to the inside of the camera 100. Then, the camera 100 executes image capturing and delivers an image obtained by the image capturing to the information processing device 300. Incidentally, the adjustment mode is referred to also as a first mode. The normal mode is referred to also as a second mode.

The camera 200 is a monitoring camera, for example. The camera 200 is referred to also as a first image capturing device. The camera 200 encodes an image obtained by executing the image capturing. When the camera 100 is in the adjustment mode, the camera 200 transmits the encoded image to the camera 100. Here, the camera 200 is a device that generates an image with optimum image quality. In other words, the camera 200 is a camera that has been adjusted. Incidentally, the adjustment may be either automatic adjustment or manual adjustment by the user.

The information processing device 300 is a Personal Computer (PC), for example. The information processing device 300 transmits setting information or the like to the camera 100.

Next, hardware included in the camera 100 will be described below.

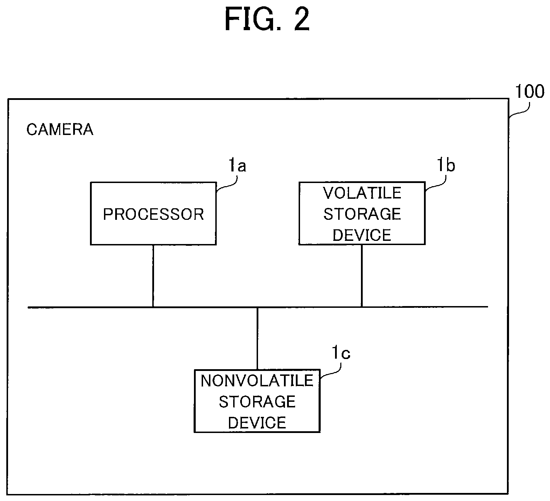

Fig. 2 is a diagram showing the hardware included in the camera in the first embodiment. The camera 100 includes a processor 1a, a volatile storage device 1b and a nonvolatile storage device 1c.

The processor 1a controls the whole of the camera 100. The processor 1a is a Central Processing Unit (CPU), a Field Programmable Gate Array (FPGA) or the like, for example. The processor 1a can also be a multiprocessor. The camera 100 may include a processing circuit instead of the processor 1a. The processing circuit may be either a single circuit or a combined circuit.

The volatile storage device 1b is main storage of the camera 100. The volatile storage device 1b is a Random Access Memory (RAM), for example. The nonvolatile storage device 1c is auxiliary storage of the camera 100. The nonvolatile storage device 1c is a flash memory or a Secure Digital (SD) card, for example.

Next, functions included in the camera 100 will be described below.

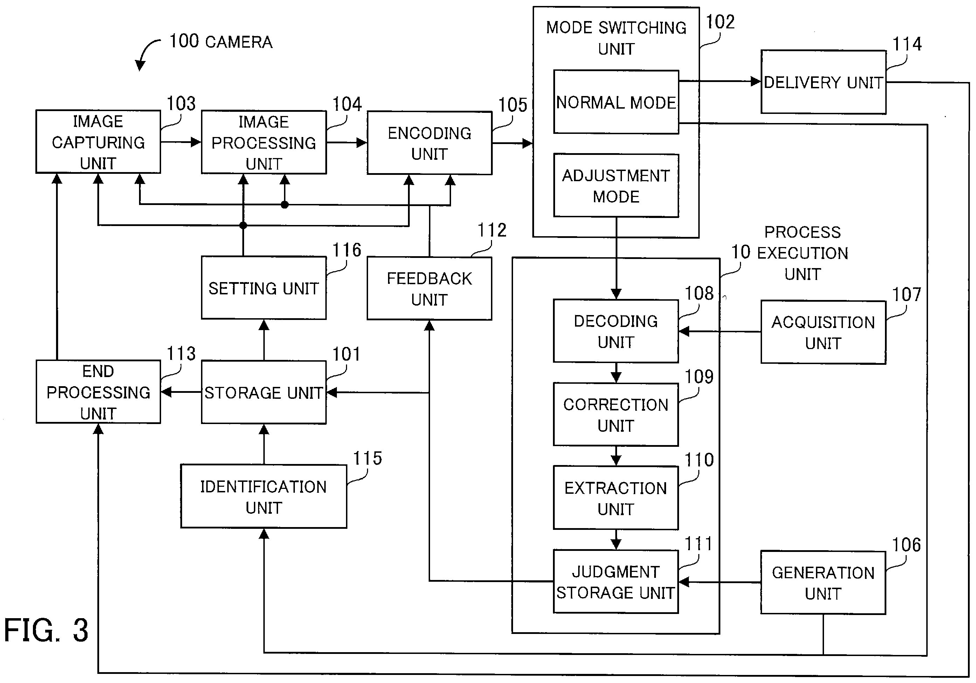

Fig. 3 is a diagram showing functional blocks included in the camera in the first embodiment. The camera 100 includes a storage unit 101, a mode switching unit 102, an image capturing unit 103, an image processing unit 104, an encoding unit 105, a generation unit 106, an acquisition unit 107, a process execution unit 10, a feedback unit 112, an end processing unit 113, a delivery unit 114, an identification unit 115 and a setting unit 116. The process execution unit 10 includes a decoding unit 108, a correction unit 109, an extraction unit 110 and a judgment storage unit 111.

The storage unit 101 may be implemented as a storage area reserved in the volatile storage device 1b or the nonvolatile storage device 1c.

Part or all of the process execution unit 10, the mode switching unit 102, the image processing unit 104, the encoding unit 105, the generation unit 106, the acquisition unit 107, the decoding unit 108, the correction unit 109, the extraction unit 110, the judgment storage unit 111, the feedback unit 112, the end processing unit 113, the delivery unit 114, the identification unit 115 and the setting unit 116 may be implemented by a processing circuit. Further, part or all of the process execution unit 10, the mode switching unit 102, the image processing unit 104, the encoding unit 105, the generation unit 106, the acquisition unit 107, the decoding unit 108, the correction unit 109, the extraction unit 110, the judgment storage unit 111, the feedback unit 112, the end processing unit 113, the delivery unit 114, the identification unit 115 and the setting unit 116 may be implemented as modules of a program executed by the processor 1a.

The storage unit 101 stores a variety of information.

The mode switching unit 102 switches the mode according to a mode switching command acquired via the acquisition unit 107. The mode switching unit 102 switches the mode from the normal mode to the adjustment mode, for example. Further, the mode switching unit 102 switches the mode from the adjustment mode to the normal mode, for example. Furthermore, the mode switching unit 102 may switch the mode at predetermined timing.

The image capturing unit 103 executes the image capturing based on parameters that have been set.

The image processing unit 104 corrects the image obtained by the image capturing by the image capturing unit 103 based on parameters that have been set.

The encoding unit 105 encodes the corrected image based on parameters that have been set. Specifically, the encoding unit 105 codes the corrected image. By this, an encoded image is generated.

Functions of the generation unit 106 will be described later.

The acquisition unit 107 acquires information transmitted from the camera 200 and the information processing device 300. For example, the acquisition unit 107 acquires an encoded image from the camera 200. Incidentally, this image is hereinafter referred to as a second encoded image. Further, the acquisition unit 107 acquires the setting information transmitted from the information processing device 300, for example. Furthermore, the acquisition unit 107 acquires the mode switching command transmitted from the information processing device 300, for example. Moreover, the acquisition unit 107 acquires a learned model, a threshold value (described later) and an end command (described later) transmitted from the information processing device 300, for example. When the learned model and the threshold value are acquired, the acquisition unit 107 stores the learned model and the threshold value in the storage unit 101. Incidentally, the learned model and the threshold value may also be previously stored in the storage unit 101.

The process execution unit 10 in the adjustment mode executes a decoding process, an extraction process and a judgment storage process. Specifically, the decoding process, the extraction process and the judgment storage process are executed by the decoding unit 108, the extraction unit 110 and the judgment storage unit 111. Thus, the decoding unit 108, the extraction unit 110 and the judgment storage unit 111 will be described below. Incidentally, functions of the correction unit 109 will be described later.

The decoding unit 108 decodes the image encoded by the encoding unit 105 (hereinafter referred to as a first encoded image) and the second encoded image.

Based on the image (hereinafter referred to as a first decoded image) obtained by the decoding of the first encoded image and the image (hereinafter referred to as a second decoded image) obtained by the decoding of the second encoded image, the extraction unit 110 extracts an image quality element value of the first decoded image and the image quality element value of the second decoded image. Incidentally, the image quality element value is a value regarding the image quality. Specifically, the image quality element value is at least one of lightness, saturation, sharpness and a noise amount.

The judgment storage unit 111 judges an image quality similarity level as a similarity level between the image quality of the first decoded image and the image quality of the second decoded image based on the image quality element value of the first decoded image and the image quality element value of the second decoded image. When the image quality similarity level is higher than or equal to a predetermined threshold value, the judgment storage unit 111 stores at least one of the parameters set to the image capturing unit 103, the parameters set to the image processing unit 104 and the parameters set to the encoding unit 105 in the storage unit 101.

Incidentally, there are cases where a field angle of the first decoded image and a field angle of the second decoded image do not coincide with each other. When the field angles do not coincide with each other, the process execution unit 10 executes a correction process. Specifically, the correction process is executed by the correction unit 109. Thus, the correction unit 109 will be described below.

The correction unit 109 corrects the field angle error between the first decoded image and the second decoded image. When the correction process has been executed, the extraction process and the judgment storage process are executed as follows:

Based on an image (hereinafter referred to as a first decoded corrected image) obtained by correcting the first decoded image and an image (hereinafter referred to as a second decoded corrected image) obtained by correcting the second decoded image, the extraction unit 110 extracts the image quality element value of the first decoded corrected image and the image quality element value of the second decoded corrected image.

The judgment storage unit 111 judges an image quality similarity level as a similarity level between the image quality of the first decoded corrected image and the image quality of the second decoded corrected image based on the image quality element value of the first decoded corrected image and the image quality element value of the second decoded corrected image. When the image quality similarity level is higher than or equal to the threshold value, the judgment storage unit 111 stores at least one of the parameters set to the image capturing unit 103, the parameters set to the image processing unit 104 and the parameters set to the encoding unit 105 in the storage unit 101.

Further, in the correction of the field angle error, it is also possible to correct only the first decoded image with reference to the second decoded image. When only the first decoded image has been corrected, the extraction process and the judgment storage process are executed as follows:
The extraction unit 110 extracts the image quality element value of the first decoded corrected image and the image quality element value of the second decoded image based on the first decoded corrected image and the second decoded image.

The judgment storage unit 111 judges an image quality similarity level as a similarity level between the image quality of the first decoded corrected image and the image quality of the second decoded image based on the image quality element value of the first decoded corrected image and the image quality element value of the second decoded image. When the image quality similarity level is higher than or equal to the threshold value, the judgment storage unit 111 stores at least one of the parameters set to the image capturing unit 103, the parameters set to the image processing unit 104 and the parameters set to the encoding unit 105 in the storage unit 101.

Furthermore, in the correction of the field angle error, it is also possible to correct only the second decoded image with reference to the first decoded image. When only the second decoded image has been corrected, the extraction process and the judgment storage process are executed as follows:
The extraction unit 110 extracts the image quality element value of the first decoded image and the image quality element value of the second decoded corrected image based on the first decoded image and the second decoded corrected image.

The judgment storage unit 111 judges an image quality similarity level as a similarity level between the image quality of the first decoded image and the image quality of the second decoded corrected image based on the image quality element value of the first decoded image and the image quality element value of the second decoded corrected image. When the image quality similarity level is higher than or equal to the threshold value, the judgment storage unit 111 stores at least one of the parameters set to the image capturing unit 103, the parameters set to the image processing unit 104 and the parameters set to the encoding unit 105 in the storage unit 101.

When the image quality similarity level is less than the threshold value, the feedback unit 112 changes the parameters set to the image capturing unit 103, the image processing unit 104 and the encoding unit 105 so that the image quality similarity level increases.

When the camera 100 is in the adjustment mode and the acquisition unit 107 acquires the end command, the end processing unit 113 ends the adjustment mode. When the camera 100 is in the normal mode and the acquisition unit 107 acquires the end command, the end processing unit 113 ends the normal mode.

The delivery unit 114 in the normal mode delivers the encoded image to the information processing device 300.

Functions of the identification unit 115 will be described later.

The setting unit 116 in the normal mode sets the parameter(s) stored in the storage unit 101 to at least one of the image capturing unit 103, the image processing unit 104 and the encoding unit 105.

Incidentally, there are cases where the generation unit 106 in the adjustment mode generates image relevant information. The image relevant information is information regarding one or more images generated by at least one of the image capturing unit 103, the image processing unit 104 and the encoding unit 105 by executing a process. In other words, the image relevant information is information regarding at least one image among a plurality of images generated by the image capturing unit 103, the image processing unit 104 and the encoding unit 105 by executing a process. For example, the image relevant information can include brightness (i.e., lightness) of the whole of the image generated by the image capturing unit 103, the brightness of the whole of the image generated by the image processing unit 104, the brightness of the whole of the image generated by the encoding unit 105, the brightness of the image generated by the image capturing unit 103 in units of blocks (i.e., sets of a plurality of pixels), the brightness of the image generated by the image processing unit 104 in units of blocks, the brightness of the image generated by the encoding unit 105 in units of blocks, mosquito noise, block distortion or a quantized gradation error of the image generated by the encoding unit 105, or the like, Further, the image relevant information may be referred to also as environment data.

When the image relevant information has been generated, each time the acquisition unit 107 acquires the second encoded image, the process execution unit 10 in the adjustment mode executes the decoding process, the extraction process and a judgment storage process of storing at least one of the parameters set to the image capturing unit 103, the parameters set to the image processing unit 104 and the parameters set to the encoding unit 105 and the image relevant information generated in the adjustment mode in the storage unit 101 while associating them with each other when the image quality similarity level is higher than or equal to the threshold value.

Further, when the image relevant information has been generated in the adjustment mode, the generation unit 106 generates image relevant information in the normal mode.

The identification unit 115 in the normal mode identifies image relevant information included in the image relevant information stored in the storage unit 101 and coinciding with or similar to the image relevant information generated in the normal mode.

The setting unit 116 in the normal mode sets one or more parameters corresponding to the identified image relevant information to at least one of the image capturing unit 103, the image processing unit 104 and the encoding unit 105.

Here, it is assumed in the following description that the process execution unit 10 executes the correction process. Further, it is assumed that the generation unit 106 generates the image relevant information.

Next, a process executed by the camera 100 will be described below by using a flowchart.

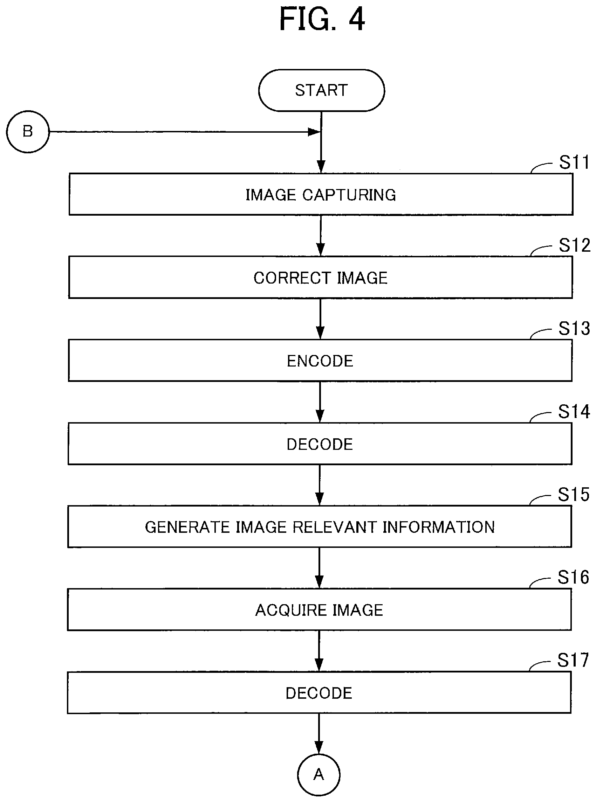

Fig. 4 is a flowchart (No. 1) showing an example of a process executed in the adjustment mode in the first embodiment.

(Step S11) The image capturing unit 103 captures an image of an image capture target range based on the parameters that have been set. Incidentally, the parameters are a black level value, a white balance value, and so forth, for example.

(Step S12) The image processing unit 104 corrects the image obtained by the image capturing by the image capturing unit 103 based on the parameters that have been set. For example, the image processing unit 104 performs color matrix correction, gamma correction, contrast correction, and so forth on the image. Incidentally, the parameters are values of a matrix to be used for the color matrix correction, a value of gamma to be used for the gamma correction, a value based on a curved line to be used for the contrast correction, and so forth, for example. Incidentally, the curved line is referred to also as a tone curve.

(Step S13) The encoding unit 105 encodes the corrected image based on the parameters that have been set. Incidentally, the parameters include a threshold value to be used in a judgment on filtering in a deblocking filter, for example. The encoded image is the first encoded image.

(Step S14) The decoding unit 108 decodes the first encoded image. The decoded image is the first decoded image.

(Step S15) The generation unit 106 generates the image relevant information based on the image obtained by the image capturing by the image capturing unit 103, the image corrected by the image processing unit 104, and the image encoded by the encoding unit 105.

(Step S16) The acquisition unit 107 acquires the second encoded image from the camera 200. Incidentally, the acquisition unit 107 may acquire the second encoded image via a device not shown in Fig. 1.

(Step S17) The decoding unit 108 decodes the second encoded image. The decoded image is the second decoded image.

Then, the process advances to step S21.

Here, the step S15 may also be executed in parallel with the steps S12 to S14. The steps S16 and S17 may also be executed before the step S11. The steps S16 and S17 may also be executed in parallel with the steps S11 to S15.

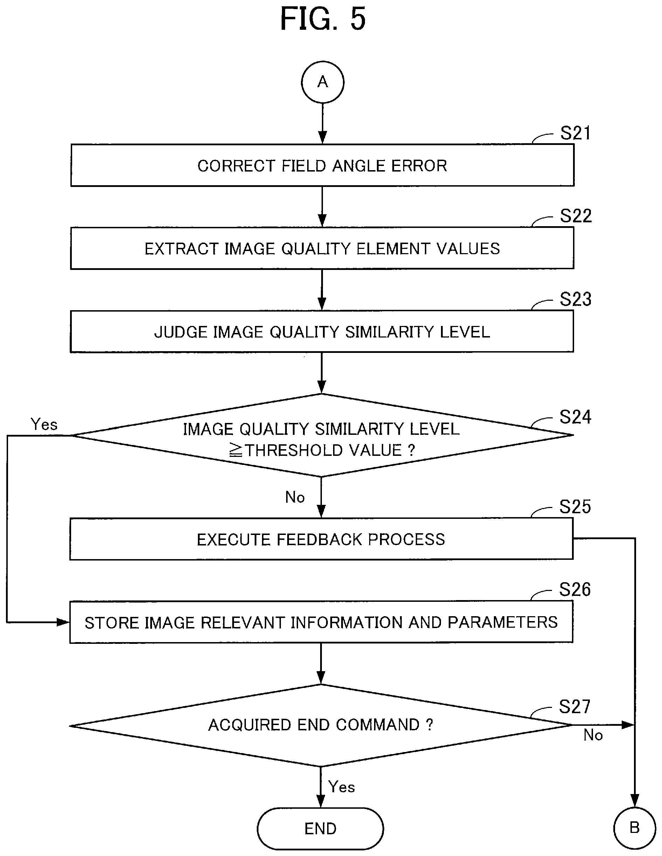

Fig. 5 is a flowchart (No. 2) showing the example of the process executed in the adjustment mode in the first embodiment.

(Step S21) The correction unit 109 corrects the image decoded in the step S14 (i.e., the first decoded image) and the image decoded in the step S17 (i.e., the second decoded image) so that the field angle error between the first decoded image and the second decoded image disappears. For example, the correction unit 109 makes the following correction. The correction unit 109 calculates a parallax by means of stereo matching. The correction unit 109 reshapes the first decoded image and the second decoded image so that the parallax disappears. Incidentally, the image obtained by correcting the first decoded image is the first decoded corrected image. The image obtained by correcting the second decoded image is the second decoded corrected image.

(Step S22) The extraction unit 110 extracts the image quality element value of the first decoded corrected image and the image quality element value of the second decoded corrected image.

(Step S23) The judgment storage unit 111 judges the image quality similarity level based on the two extracted image quality element values. For example, when judging the image quality similarity level, the judgment storage unit 111 may judge the image quality similarity level by using the two extracted image quality element values and a learned model. Incidentally, the learned model is generated by means of machine learning. Here, an example of the machine learning will be explained below. First, there are prepared a plurality of original pictures and a plurality of images obtained by slightly changing the lightness, the saturation, the sharpness and the noise amount compared to the plurality of original pictures. A plurality of subjects compare the plurality of original pictures and the plurality of images. Then, the plurality of subjects classify the plurality of images into images that look the same and images that look different. The lightness, the saturation, the sharpness and the noise amount of each image that look the same are converted into scores. The image quality element value of each image that look the same is extracted. The image quality element value is associated with the image from which the image quality element value was extracted. Each image to which the image quality element value has been associated is used as learning data. By using the learning data, the learned model outputting the image quality similarity level is generated.

(Step S24) The judgment storage unit 111 judges whether or not the image quality similarity level is higher than or equal to the predetermined threshold value. When the image quality similarity level is higher than or equal to the threshold value, the process advances to step S26. When the image quality similarity level is less than the threshold value, the process advances to step S25.

(Step S25) The feedback unit 112 executes a feedback process. In the feedback process, the parameters set to the image capturing unit 103, the image processing unit 104 and the encoding unit 105 are changed so that the image quality similarity level increases. The feedback process will be described specifically below. For example, based on the two extracted image quality element values, the feedback unit 112 calculates a difference in an HSV (Hue, Saturation, Value) histogram and a difference in a high-frequency component as noise. The feedback unit 112 sets parameters that reduce the difference in the HSV histogram and the difference in the high-frequency component to the image capturing unit 103, the image processing unit 104 and the encoding unit 105. Further, the feedback unit 112 may calculate parameters maximizing the image quality similarity level by using Bayesian optimization. The feedback unit 112 sets the calculated parameters to the image capturing unit 103, the image processing unit 104 and the encoding unit 105.

Then, the process advances to the step S11.

(Step S26) The judgment storage unit 111 stores the image relevant information generated in the step S15 and the parameters set to the image capturing unit 103, the image processing unit 104 and the encoding unit 105 in the storage unit 101 while associating them with each other.

(Step S27) The end processing unit 113 judges whether or not the acquisition unit 107 has acquired the end command. When the acquisition unit 107 has not acquired the end command, the process advances to the step S11. When the acquisition unit 107 has acquired the end command, the process ends.

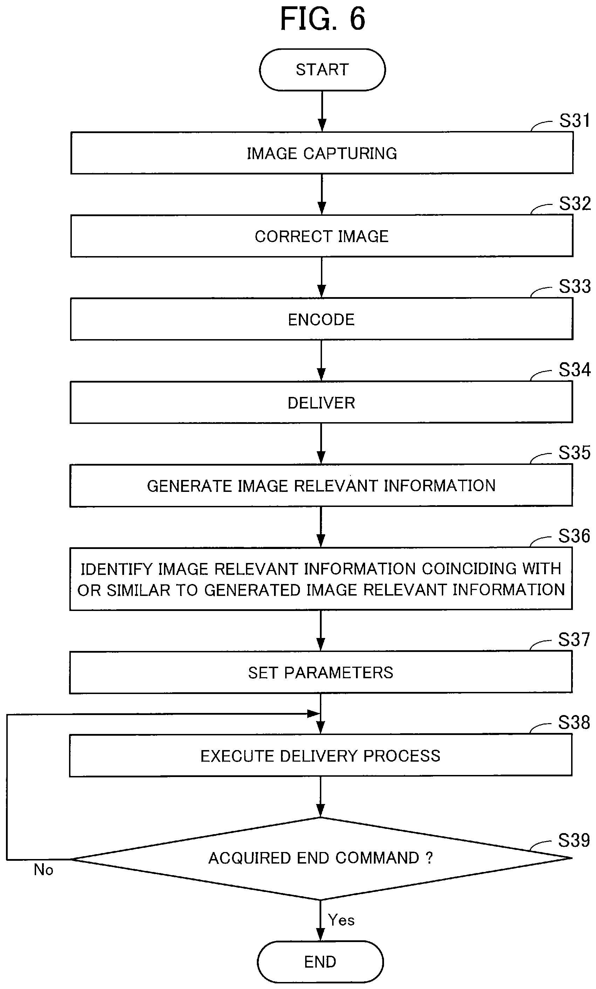

Fig. 6 is a flowchart showing an example of a process executed in the normal mode in the first embodiment.

(Step S31) The image capturing unit 103 captures an image of an image capture target range.

(Step S32) The image processing unit 104 corrects the image obtained by the image capturing by the image capturing unit 103.

(Step S33) The encoding unit 105 encodes the corrected image.

(Step S34) The delivery unit 114 delivers the encoded image to the information processing device 300.

(Step S35) The generation unit 106 generates the image relevant information based on the image obtained by the image capturing by the image capturing unit 103, the image corrected by the image processing unit 104, and the image encoded by the encoding unit 105.

(Step S36) The identification unit 115 identifies image relevant information included in the image relevant information stored in the storage unit 101 and coinciding with or similar to the generated image relevant information (i.e., the image relevant information generated in the step S35). Incidentally, "similar" may be paraphrased as "approximate".

(Step S37) The setting unit 116 sets one or more parameters corresponding to the identified image relevant information to the image capturing unit 103, the image processing unit 104 and the encoding unit 105. The parameter setting process will be described in detail below. The setting unit 116 sets parameters, to be set to the image capturing unit 103 among the parameters corresponding to the identified image relevant information, to the image capturing unit 103. The setting unit 116 sets parameters, to be set to the image processing unit 104 among the parameters corresponding to the identified image relevant information, to the image processing unit 104. The setting unit 116 sets parameters, to be set to the encoding unit 105 among the parameters corresponding to the identified image relevant information, to the encoding unit 105.

(Step S38) The image capturing unit 103, the image processing unit 104, the encoding unit 105 and the delivery unit 114 execute a delivery process. Specifically, the same process as the steps S31 to S34 is executed. Incidentally, the image capturing unit 103, the image processing unit 104 and the encoding unit 105 execute the same process as the steps S31 to S33 based on the parameters set in the step S37.

(Step S39) The end processing unit 113 judges whether or not the acquisition unit 107 has acquired the end command. When the acquisition unit 107 has not acquired the end command, the process advances to the step S38. When the acquisition unit 107 has acquired the end command, the process ends.

Here, the process of Figs. 4 to 6 will be explained below. When the process does not end in the step S27, a combination of the image relevant information and the parameters are stored in the storage unit 101 in the subsequent step S26. Thus, a plurality of combinations are stored. For example, one of the plurality of combinations is a combination of the image relevant information and the parameters for adjusting the image quality to image quality equivalent to the image quality of the image generated by the camera 200 in the morning. Further, for example, one of the plurality of combinations is a combination of the image relevant information and the parameters for adjusting the image quality to image quality equivalent to the image quality of the image generated by the camera 200 in the daytime. As above, the parameters in the plurality of combinations are parameters for adjusting the image quality to image quality equivalent to the image quality varying depending on the environment (i.e., the image quality of images generated by the camera 200). In Fig. 6, for example, parameters corresponding to image relevant information coinciding with or similar to the image relevant information based on the image generated by the camera 100 in the morning are set to the image capturing unit 103, the image processing unit 104 and the encoding unit 105. By this setting, the image quality of images generated by the camera 100 becomes equivalent to the image quality of images generated by the camera 200 in the morning. As above, the camera 100 is capable of generating images with image quality equivalent to the image quality varying depending on the environment (i.e., the image quality of images generated by the camera 200).

Further, the camera 100 may execute the parameter identification process and the parameter setting process by the following method. The generation unit 106 generates the image relevant information in the normal mode. The acquisition unit 107 acquires a learned model. The acquisition unit 107 acquires the learned model from the storage unit 101, for example. Alternatively, the acquisition unit 107 acquires the learned model from an external device, for example. Incidentally, the learned model is a learned model generated by using the image relevant information as learning data. The camera 100 is capable of identifying optimum parameters corresponding to the image relevant information by using the learned model. The identification unit 115 identifies parameters to be set to at least one of the image capturing unit 103, the image processing unit 104 and the encoding unit 105 based on the learned model and the image relevant information generated in the normal mode. The setting unit 116 sets the identified parameter(s) to at least one of the image capturing unit 103, the image processing unit 104 and the encoding unit 105.

Incidentally, there are cases where a camera included in the system is replaced with another camera. Then, there are cases where it is desired to make the image quality of the image generated by the former camera and the image quality of the image generated by the latter camera equivalent to each other. To realize the equivalent image quality, a user having expertise needs to perform the work. Further, there are cases where a camera is added to the system. Then, there are cases where it is desired to make the image quality of the image generated by an already-installed camera and the image quality of the image generated by the added camera equivalent to each other. To realize the equivalent image quality, a user having expertise needs to perform the work. The work performed by the user increases the load on the user.

According to the first embodiment, the camera 100 in the adjustment mode stores the parameters for adjusting the image quality to image quality equivalent to the image quality of images generated by the camera 200. Then, the camera 100 in the normal mode generates an image by using the stored parameters. The image quality of the image generated by the camera 100 is equivalent to the image quality of images generated by the camera 200. Since the equivalent image quality can be realized automatically as above, the user does not need to perform the work. Thus, according to the first embodiment, the camera 100 is capable of reducing the load on the user.

Further, when a camera is newly developed, there are cases where it is desired to make the image quality of the image generated by an already-existing camera and the image quality of the image generated by the new camera equivalent to each other. To realize the equivalent image quality, a user having expertise needs to manually search for the parameters. The work performed by the user increases the load on the user.

For example, in cases where the camera 100 is a camera being newly developed and the camera 200 is an already-existing camera, the user does not need to perform the work since the equivalent image quality can be realized automatically. Thus, according to the first embodiment, the camera 100 is capable of reducing the load on the user. Further, according to the first embodiment, it is possible to shorten the development period.

Furthermore, according to the first embodiment, the camera 100 executes the feedback. By the feedback, the parameters are adjusted automatically. Therefore, the user does not need to perform work. Accordingly, the camera 100 is capable of reducing the load on the user.

### Second Embodiment

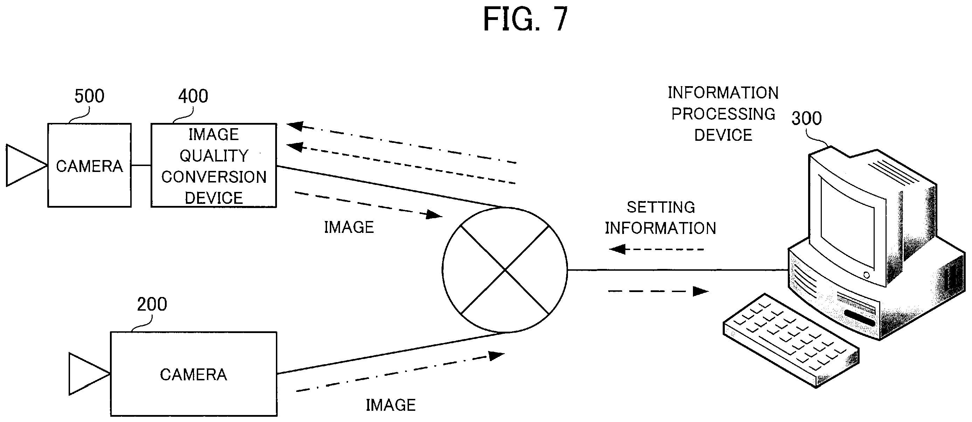

Next, a second embodiment will be described below. In the second embodiment, the description will be given mainly of features different from those in the first embodiment. In the second embodiment, the description is omitted for features in common with the first embodiment. Figs. 7 to 12 are referred to in the description of the second embodiment.

In the first embodiment, the description was given of a case where the camera 100 has various functions. However, providing the camera 100 with various functions makes the camera 100 expensive. Therefore, in the second embodiment, a description will be given of a case where a different device has the functions other than the image capturing unit 103.

Fig. 7 is a diagram showing an example of an image quality conversion system in the second embodiment. The image quality conversion system includes a camera 500, the camera 200, the information processing device 300 and an image quality conversion device 400. The camera 500 is connected to the image quality conversion device 400. Further, the camera 200, the information processing device 300 and the image quality conversion device 400 are connected via a network.

For example, the camera 500 is an inexpensive camera. The camera 500 is a camera that has not been adjusted. Therefore, the camera 500 generates images with low image quality. The camera 500 transmits the generated image to the image quality conversion device 400. The camera 500 may also encode the generated image and transmit the encoded image to the image quality conversion device 400.

On the other hand, the camera 200 is a camera that has been adjusted. In other words, the camera 200 is a camera that has been adjusted so as to generate images with high image quality. Therefore, the camera 200 generates images with high image quality.

Incidentally, the camera 200 is referred to also as the first image capturing device. The camera 500 is referred to also as a second image capturing device.

Next, hardware included in the image quality conversion device 400 will be described below.

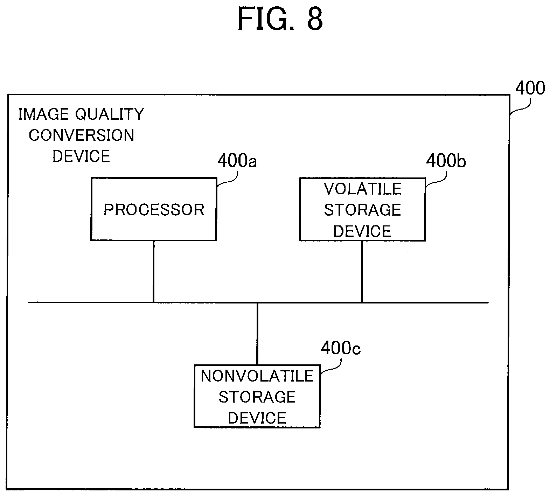

Fig. 8 is a diagram showing the hardware included in the image quality conversion device in the second embodiment. The image quality conversion device 400 includes a processor 400a, a volatile storage device 400b and a nonvolatile storage device 400c.

The processor 400a controls the whole of the image quality conversion device 400. The processor 400a is a CPU, an FPGA or the like, for example. The processor 400a can also be a multiprocessor. The image quality conversion device 400 may include a processing circuit instead of the processor 400a. The processing circuit may be either a single circuit or a combined circuit.

The volatile storage device 400b is main storage of the image quality conversion device 400. The volatile storage device 400b is a RAM, for example. The nonvolatile storage device 400c is auxiliary storage of the image quality conversion device 400. The nonvolatile storage device 400c is a Hard Disk Drive (HDD) or an SSD, for example.

Next, functions included in the image quality conversion device 400 will be described below.

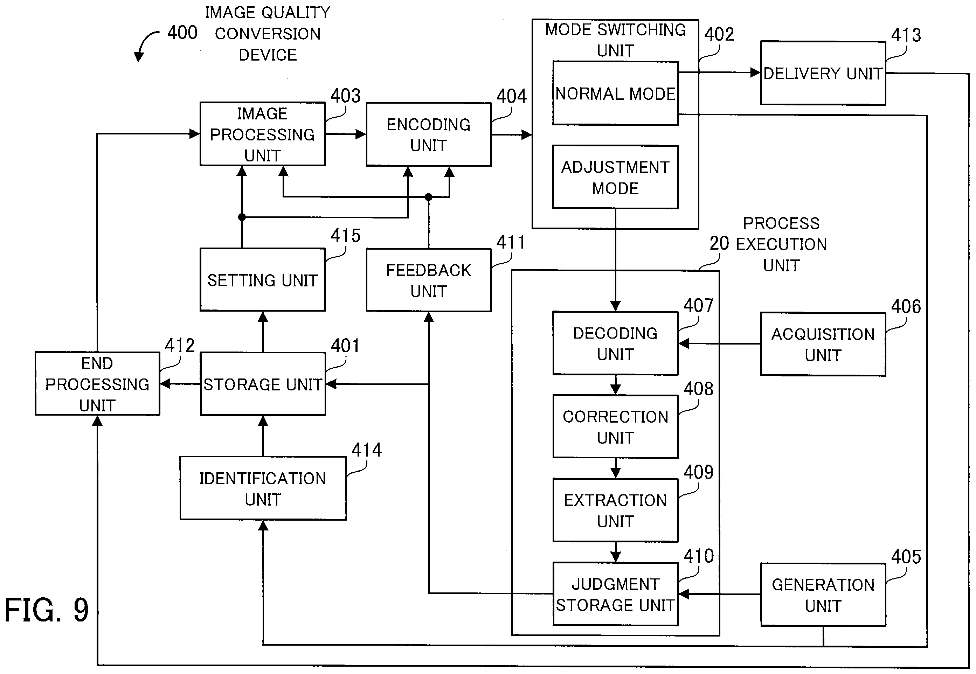

Fig. 9 is a diagram showing functional blocks included in the image quality conversion device in the second embodiment. The image quality conversion device 400 includes a storage unit 401, a mode switching unit 402, an image processing unit 403, an encoding unit 404, a generation unit 405, an acquisition unit 406, a process execution unit 20, a feedback unit 411, an end processing unit 412, a delivery unit 413, an identification unit 414 and a setting unit 415. The process execution unit 20 includes a decoding unit 407, a correction unit 408, an extraction unit 409 and a judgment storage unit 410.

The storage unit 401 may be implemented as a storage area reserved in the volatile storage device 400b or the nonvolatile storage device 400c.

Part or all of the process execution unit 20, the mode switching unit 402, the image processing unit 403, the encoding unit 404, the generation unit 405, the acquisition unit 406, the decoding unit 407, the correction unit 408, the extraction unit 409, the judgment storage unit 410, the feedback unit 411, the end processing unit 412, the delivery unit 413, the identification unit 414 and the setting unit 415 may be implemented by a processing circuit. Further, part or all of the process execution unit 20, the mode switching unit 402, the image processing unit 403, the encoding unit 404,the generation unit 405, the acquisition unit 406, the decoding unit 407, the correction unit 408, the extraction unit 409, the judgment storage unit 410, the feedback unit 411, the end processing unit 412, the delivery unit 413, the identification unit 414 and the setting unit 415 may be implemented as modules of a program executed by the processor 400a.

The storage unit 401 stores a variety of information.

The mode switching unit 402 switches the mode according to the mode switching command acquired via the acquisition unit 406. The mode switching unit 402 switches the mode from the normal mode to the adjustment mode, for example. Further, the mode switching unit 402 switches the mode from the adjustment mode to the normal mode, for example. Furthermore, the mode switching unit 402 may switch the mode with predetermined timing.

The image processing unit 403 corrects the image obtained by the image capturing by the camera 500 based on parameters that have been set.

The encoding unit 404 encodes the corrected image based on parameters that have been set. Specifically, the encoding unit 404 codes the corrected image. By this, an encoded image is generated.

Functions of the generation unit 405 will be described later.

The acquisition unit 406 acquires information transmitted from the camera 200 and the information processing device 300. For example, the acquisition unit 406 acquires an encoded image from the camera 200. Incidentally, this image is hereinafter referred to as the second encoded image. Further, the acquisition unit 406 acquires the setting information transmitted from the information processing device 300, for example. Furthermore, the acquisition unit 406 acquires the mode switching command transmitted from the information processing device 300, for example. Moreover, the acquisition unit 406 acquires a learned model, a threshold value (described later) and an end command (described later) transmitted from the information processing device 300, for example. When the learned model and the threshold value are acquired, the acquisition unit 406 stores the learned model and the threshold value in the storage unit 401. Incidentally, the learned model and the threshold value may also be previously stored in the storage unit 401.

Further, the acquisition unit 406 acquires an image obtained by the image capturing by the camera 500. The acquisition unit 406 may also acquire an image obtained by encoding the aforementioned image. When the acquire image has been encoded, the acquisition unit 406 decodes the encoded image. Then, the decoded image can be regarded as an image obtained by the image capturing by the camera 500.

The process execution unit 20 in the adjustment mode executes a decoding process, an extraction process and a judgment storage process. Specifically, the decoding process, the extraction process and the judgment storage process are executed by the decoding unit 407, the extraction unit 409 and the judgment storage unit 410. Thus, the decoding unit 407, the extraction unit 409 and the judgment storage unit 410 will be described below. Incidentally, functions of the correction unit 408 will be described later.

The decoding unit 407 decodes the image encoded by the encoding unit 404 (hereinafter referred to as the first encoded image) and the second encoded image.

Based on the image (hereinafter referred to as the first decoded image) obtained by the decoding of the first encoded image and the image (hereinafter referred to as the second decoded image) obtained by the decoding of the second encoded image, the extraction unit 409 extracts the image quality element value of the first decoded image and the image quality element value of the second decoded image.

The judgment storage unit 410 judges the image quality similarity level as the similarity level between the image quality of the first decoded image and the image quality of the second decoded image based on the image quality element value of the first decoded image and the image quality element value of the second decoded image. When the image quality similarity level is higher than or equal to a predetermined threshold value, the judgment storage unit 410 stores at least one of the parameters set to the image processing unit 403 and the parameters set to the encoding unit 404 in the storage unit 401.

Incidentally, there are cases where the field angle of the first decoded image and the field angle of the second decoded image do not coincide with each other. When the field angles do not coincide with each other, the process execution unit 20 executes a correction process. Specifically, the correction process is executed by the correction unit 408. Thus, the correction unit 408 will be described below.

The correction unit 408 corrects the field angle error between the first decoded image and the second decoded image. When the correction process has been executed, the extraction process and the judgment storage process are executed as follows.

Based on an image (hereinafter referred to as the first decoded corrected image) obtained by correcting the first decoded image and an image (hereinafter referred to as the second decoded corrected image) obtained by correcting the second decoded image, the extraction unit 409 extracts the image quality element value of the first decoded corrected image and the image quality element value of the second decoded corrected image.

The judgment storage unit 410 judges the image quality similarity level as the similarity level between the image quality of the first decoded corrected image and the image quality of the second decoded corrected image based on the image quality element value of the first decoded corrected image and the image quality element value of the second decoded corrected image. When the image quality similarity level is higher than or equal to the threshold value, the judgment storage unit 410 stores at least one of the parameters set to the image processing unit 403 and the parameters set to the encoding unit 404 in the storage unit 401.

Further, in the correction of the field angle error, it is also possible to correct only the first decoded image with reference to the second decoded image. When only the first decoded image has been corrected, the extraction process and the judgment storage process are executed as follows.

The extraction unit 409 extracts the image quality element value of the first decoded corrected image and the image quality element value of the second decoded image based on the first decoded corrected image and the second decoded image.

The judgment storage unit 410 judges the image quality similarity level as the similarity level between the image quality of the first decoded corrected image and the image quality of the second decoded image based on the image quality element value of the first decoded corrected image and the image quality element value of the second decoded image. When the image quality similarity level is higher than or equal to the threshold value, the judgment storage unit 410 stores at least one of the parameters set to the image processing unit 403 and the parameters set to the encoding unit 404 in the storage unit 401.

Furthermore, in the correction of the field angle error, it is also possible to correct only the second decoded image with reference to the first decoded image. When only the second decoded image has been corrected, the extraction process and the judgment storage process are executed as follows.

The extraction unit 409 extracts the image quality element value of the first decoded image and the image quality element value of the second decoded corrected image based on the first decoded image and the second decoded corrected image.

The judgment storage unit 410 judges the image quality similarity level as the similarity level between the image quality of the first decoded image and the image quality of the second decoded corrected image based on the image quality element value of the first decoded image and the image quality element value of the second decoded corrected image. When the image quality similarity level is higher than or equal to the threshold value, the judgment storage unit 410 stores at least one of the parameters set to the image processing unit 403 and the parameters set to the encoding unit 404 in the storage unit 401.

When the image quality similarity level is less than the threshold value, the feedback unit 411 changes the parameters set to the image processing unit 403 and the encoding unit 404 so that the image quality similarity level increases.

When the image quality conversion device 400 is in the adjustment mode and the acquisition unit 406 acquires the end command, the end processing unit 412 ends the adjustment mode. When the image quality conversion device 400 is in the normal mode and the acquisition unit 406 acquires the end command, the end processing unit 412 ends the normal mode.

The delivery unit 413 in the normal mode delivers the encoded image to the information processing device 300.

Functions of the identification unit 414 will be described later.

The setting unit 415 in the normal mode sets the parameter(s) stored in the storage unit 401 to at least one of the image processing unit 403 and the encoding unit 404.

Incidentally, there are cases where the generation unit 405 in the adjustment mode generates image relevant information. The image relevant information is information regarding one or more images generated by at least one of the image processing unit 403 and the encoding unit 404 by executing a process. For example, the image relevant information can include the brightness of the whole of the image generated by the image processing unit 403, the brightness of the whole of the image generated by the encoding unit 404, the brightness of the image generated by the image processing unit 403 in units of blocks, the brightness of the image generated by the encoding unit 404 in units of blocks, the mosquito noise, the block distortion or the quantized gradation error of the image generated by the encoding unit 404, or the like.

When the image relevant information has been generated, each time the acquisition unit 406 acquires the image obtained by the image capturing by the camera 500 and the second encoded image, the process execution unit 20 in the adjustment mode executes the decoding process, the extraction process and a judgment storage process of storing at least one of the parameters set to the image processing unit 403 and the parameters set to the encoding unit 404 and the image relevant information generated in the adjustment mode in the storage unit 401 while associating them with each other when the image quality similarity level is higher than or equal to the threshold value.

Further, when the image relevant information has been generated in the adjustment mode, the generation unit 405 generates image relevant information in the normal mode.

The identification unit 414 in the normal mode identifies image relevant information included in the image relevant information stored in the storage unit 401 and coinciding with or similar to the image relevant information generated in the normal mode.

The setting unit 415 in the normal mode sets one or more parameters corresponding to the identified image relevant information to at least one of the image processing unit 403 and the encoding unit 404.

Here, it is assumed in the following description that the process execution unit 20 executes the correction process. Further, it is assumed that the generation unit 405 generates the image relevant information.

Next, a process executed by the image quality conversion device 400 will be described below by using a flowchart.

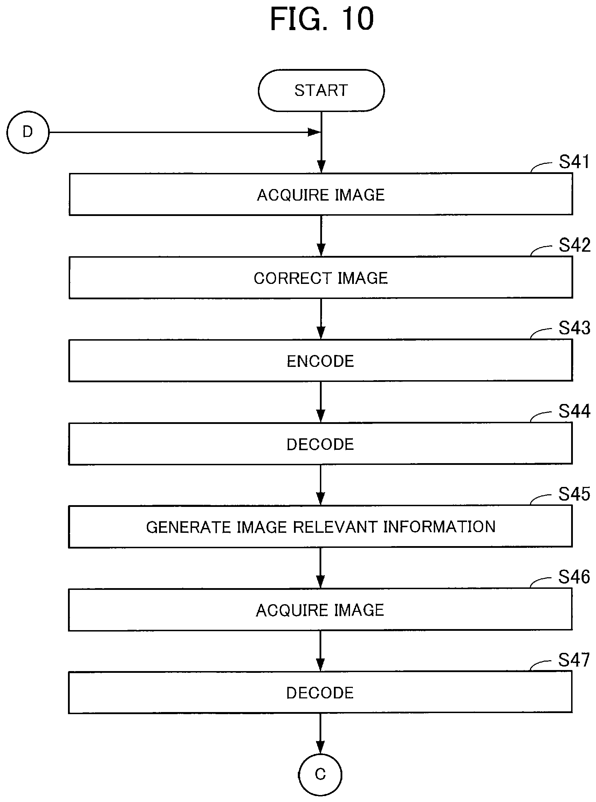

Fig. 10 is a flowchart (No. 1) showing an example of a process executed in the adjustment mode in the second embodiment.

(Step S41) The acquisition unit 406 acquires an image from the camera 500.

(Step S42) The image processing unit 403 corrects the image obtained by the image capturing by the camera 500 based on the parameters that have been set.

(Step S43) The encoding unit 404 encodes the corrected image based on the parameters that have been set. The encoded image is the first encoded image.

(Step S44) The decoding unit 407 decodes the first encoded image. The decoded image is the first decoded image.

(Step S45) The generation unit 405 generates the image relevant information based on the image corrected by the image processing unit 403 and the image encoded by the encoding unit 404.

(Step S46) The acquisition unit 406 acquires the second encoded image from the camera 200. Incidentally, the acquisition unit 406 may acquire the second encoded image via a device not shown in Fig. 7.

(Step S47) The decoding unit 407 decodes the second encoded image. The decoded image is the second decoded image.

Then, the process advances to step S51.

Here, the step S45 may also be executed in parallel with the steps S42 to S44. The steps S46 and S47 may also be executed before the step S41. The steps S46 and S47 may also be executed in parallel with the steps S41 to S45.

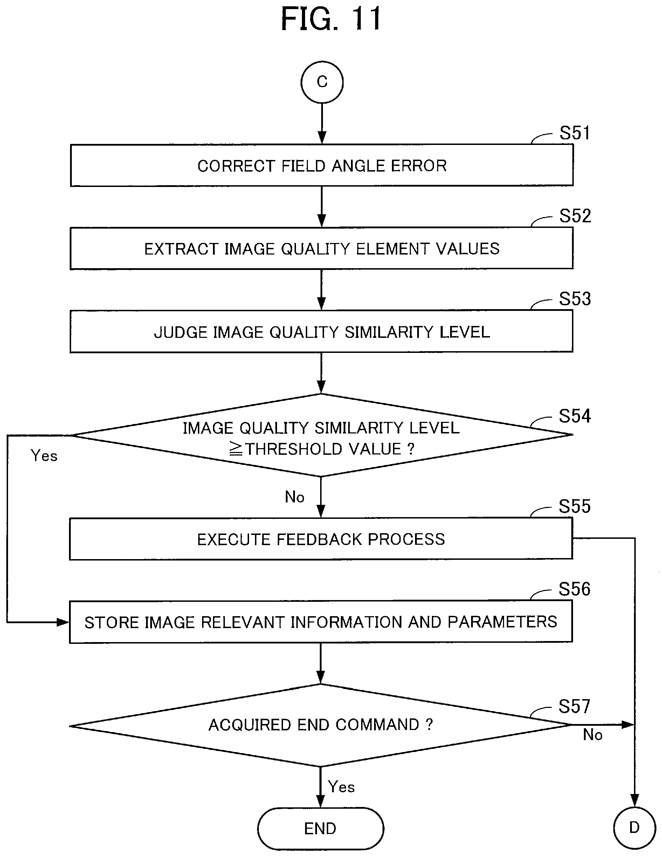

Fig. 11 is a flowchart (No. 2) showing the example of the process executed in the adjustment mode in the first embodiment.

(Step S51) The correction unit 408 corrects the image decoded in the step S44 (i.e., the first decoded image) and the image decoded in the step S47 (i.e., the second decoded image) so that the field angle error between the first decoded image and the second decoded image disappears. The image obtained by correcting the first decoded image is the first decoded corrected image. The image obtained by correcting the second decoded image is the second decoded corrected image.

(Step S52) The extraction unit 409 extracts the image quality element value of the first decoded corrected image and the image quality element value of the second decoded corrected image.

(Step S53) The judgment storage unit 410 judges the image quality similarity level based on the two extracted image quality element values.

(Step S54) The judgment storage unit 410 judges whether or not the image quality similarity level is higher than or equal to the predetermined threshold value. When the image quality similarity level is higher than or equal to the threshold value, the process advances to step S56. When the image quality similarity level is less than the threshold value, the process advances to step S55.

(Step S55) The feedback unit 411 executes a feedback process. In the feedback process, the parameters set to the image processing unit 403 and the encoding unit 404 are changed so that the image quality similarity level increases.

Then, the process advances to the step S41.

(Step S56) The judgment storage unit 410 stores the image relevant information generated in the step S45 and the parameters set to the image processing unit 403 and the encoding unit 404 in the storage unit 401 while associating them with each other.

(Step S57) The end processing unit 412 judges whether or not the acquisition unit 406 has acquired the end command. When the acquisition unit 406 has not acquired the end command, the process advances to the step S41. When the acquisition unit 406 has acquired the end command, the process ends.

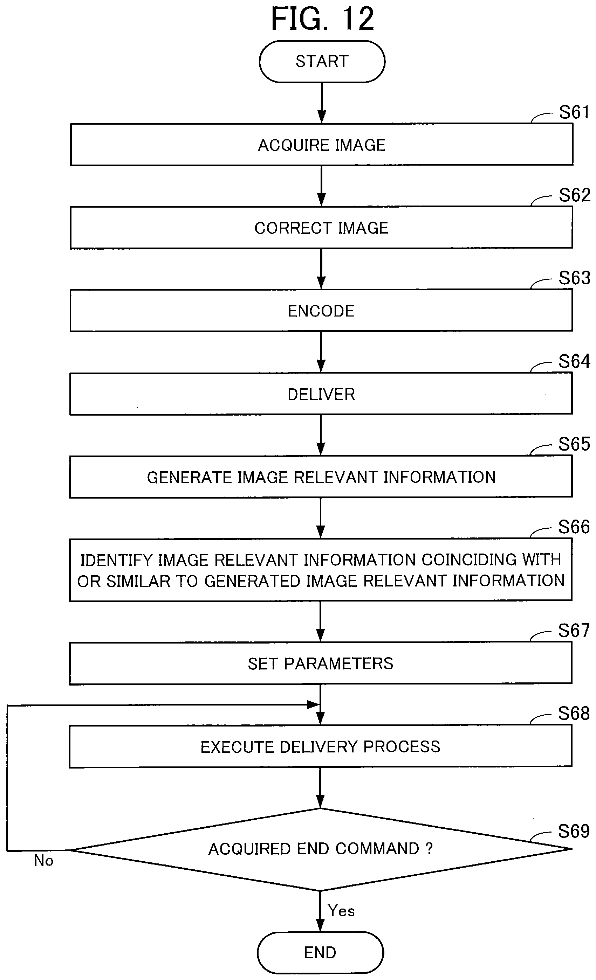

Fig. 12 is a flowchart showing an example of a process executed in the normal mode in the second embodiment.

(Step S61) The acquisition unit 406 acquires an image from the camera 500.

(Step S62) The image processing unit 403 corrects the image obtained by the image capturing by the camera 500.

(Step S63) The encoding unit 404 encodes the corrected image.

(Step S64) The delivery unit 413 delivers the encoded image to the information processing device 300.

(Step S65) The generation unit 405 generates the image relevant information based on the image corrected by the image processing unit 403 and the image encoded by the encoding unit 404.

(Step S66) The identification unit 414 identifies image relevant information included in the image relevant information stored in the storage unit 401 and coinciding with or similar to the generated image relevant information. Incidentally, "similar" may be paraphrased as "approximate".

(Step S67) The setting unit 415 sets one or more parameters corresponding to the identified image relevant information to the image processing unit 403 and the encoding unit 404. The parameter setting process will be described in detail below. The setting unit 415 sets parameters, to be set to the image processing unit 403 among the parameters corresponding to the identified image relevant information, to the image processing unit 403. The setting unit 415 sets parameters, to be set to the encoding unit 404 among the parameters corresponding to the identified image relevant information, to the encoding unit 404.

(Step S68) The acquisition unit 406, the image processing unit 403, the encoding unit 404 and the delivery unit 413 execute a delivery process. Specifically, the same process as the steps S61 to S64 is executed. Incidentally, the image processing unit 403 and the encoding unit 404 execute the same process as the steps S62 and S63 based on the parameters set in the step S67.

(Step S69) The end processing unit 412 judges whether or not the acquisition unit 406 has acquired the end command. When the acquisition unit 406 has not acquired the end command, the process advances to the step S68. When the acquisition unit 406 has acquired the end command, the process ends.

Further, the image quality conversion device 400 may execute the parameter identification process and the parameter setting process by the following method. The generation unit 405 generates the image relevant information in the normal mode. The acquisition unit 406 acquires a learned model. The acquisition unit 406 acquires the learned model from the storage unit 401, for example. Alternatively, the acquisition unit 406 acquires the learned model from an external device, for example. Incidentally, the learned model is a learned model generated by using the image relevant information as learning data. The image quality conversion device 400 is capable of identifying optimum parameters corresponding to the image relevant information by using the learned model. The identification unit 414 identifies parameters to be set to at least one of the image processing unit 403 and the encoding unit 404 based on the learned model and the image relevant information generated in the normal mode. The setting unit 415 sets the identified parameters to at least one of the image processing unit 403 and the encoding unit 404.

According to the second embodiment, the image quality conversion device 400 in the adjustment mode stores the parameters for adjusting the image quality to image quality equivalent to the image quality of images generated by the camera 200. Then, the image quality conversion device 400 in the normal mode changes the image quality of an image generated by the camera 500 by using the stored parameters. The image quality changed by the image quality conversion device 400 is equivalent to the image quality of images generated by the camera 200. Since the equivalent image quality can be realized automatically as above, the user does not need to perform the work. Thus, according to the second embodiment, the image quality conversion device 400 is capable of reducing the load on the user.

Further, the above-described effect can be realized even when the image quality conversion system in the second embodiment includes an inexpensive camera (e.g., the camera 500).

### Third Embodiment

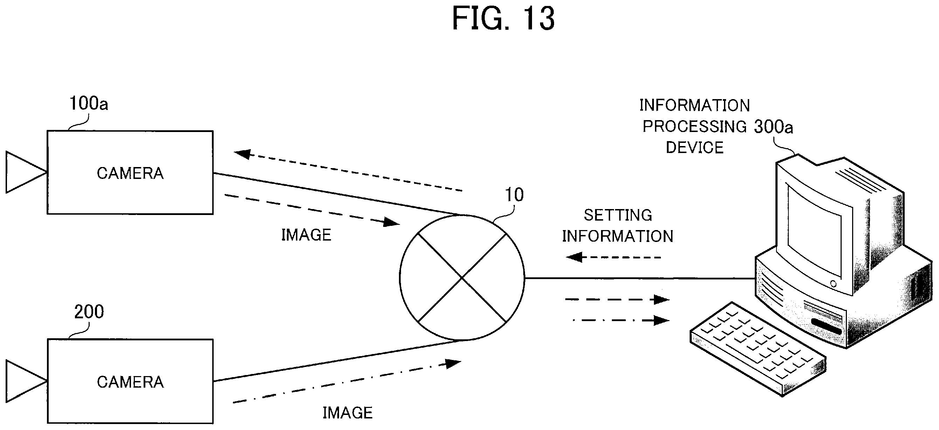

Next, a third embodiment will be described below. In the third embodiment, the description will be given mainly of features different from those in the first embodiment. In the third embodiment, the description is omitted for features in common with the first embodiment. Figs. 13 to 16 are referred to in the description of the third embodiment.

In the third embodiment, a description will be given of a case where the information processing device includes part of the functions of the camera 100.

Fig. 13 is a diagram showing an example of an image quality conversion system in the third embodiment. The image quality conversion system includes a camera 100a, the camera 200 and an information processing device 300a. The camera 100a, the camera 200 and the information processing device 300a are connected via a network.

The camera 100a is a monitoring camera, for example. The camera 100a is referred to also as the second image capturing device. The camera 100a is a camera that has not been adjusted. The camera 100a has the adjustment mode and the normal mode. The adjustment mode is referred to also as the first mode. The normal mode is referred to also as the second mode.

The camera 200 is a monitoring camera, for example. The camera 200 is referred to also as the first image capturing device. The camera 200 is a camera that has been adjusted.

The information processing device 300a is a PC or a recorder, for example. The information processing device 300a transmits information such as the setting information to the camera 100a.

Next, functions included in the camera 100a will be described below.

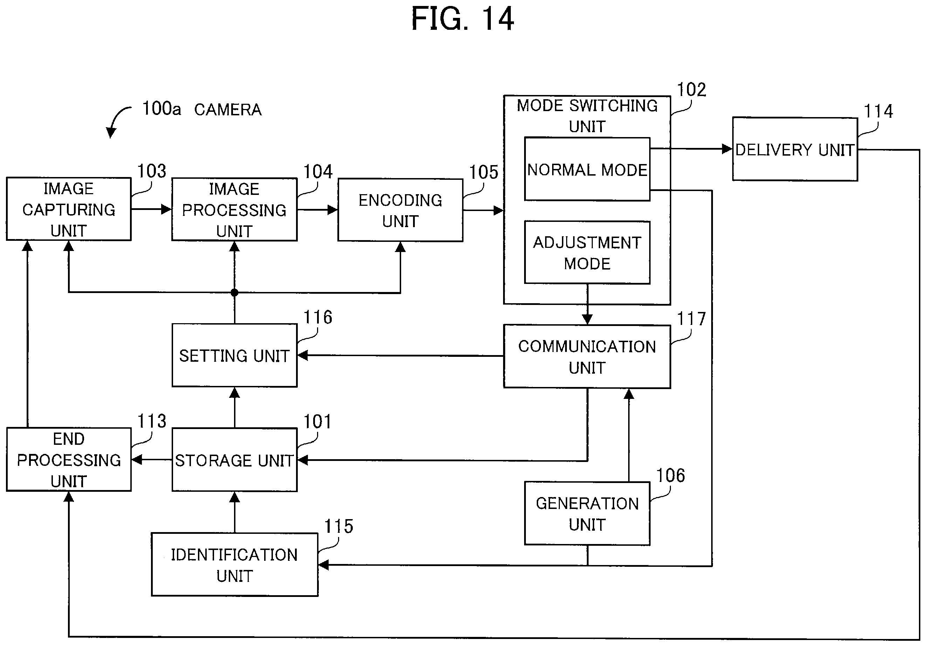

Fig. 14 is a diagram showing functional blocks included in the camera in the third embodiment. The camera 100a includes the storage unit 101, the mode switching unit 102, the image capturing unit 103, the image processing unit 104, the encoding unit 105, the generation unit 106, the end processing unit 113, the delivery unit 114, the identification unit 115, the setting unit 116 and a communication unit 117. Each component in Fig. 14 that is the same as a component shown in Fig. 3 is assigned the same reference character as in Fig. 3.

The setting unit 116 in Fig. 14 differs from the setting unit 116 in Fig. 3 in operating also in the adjustment mode. Detailed functions of the setting unit 116 will be described later.

Some of functions of the communication unit 117 are the same as functions of the acquisition unit 107. Detailed functions of the communication unit 117 will be described later.

Next, functions included in the information processing device 300a will be described below.

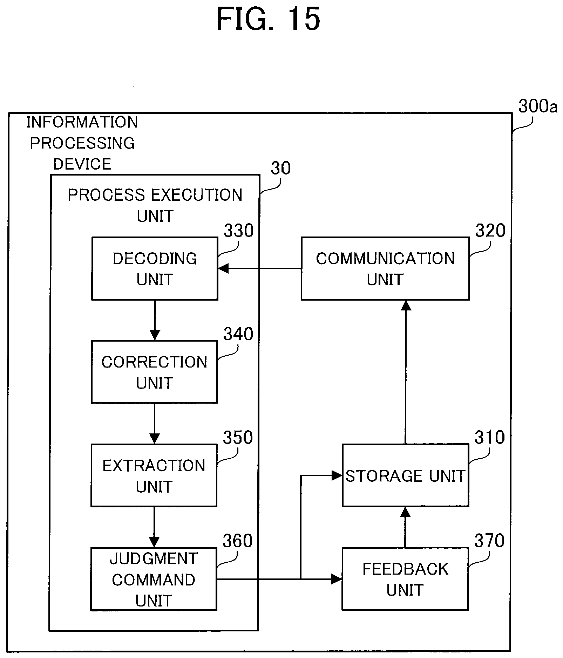

Fig. 15 is a diagram showing functional blocks included in the information processing device in the third embodiment. The information processing device 300a includes a process execution unit 30, a storage unit 310, a communication unit 320 and a feedback unit 370. The process execution unit 30 includes a decoding unit 330, a correction unit 340, an extraction unit 350 and a judgment command unit 360.

The storage unit 310 may be implemented as a storage area reserved in a volatile storage device or a nonvolatile storage device included in the information processing device 300a.

Part or all of the process execution unit 30, the communication unit 320, the decoding unit 330, the correction unit 340, the extraction unit 350, the judgment command unit 360 and the feedback unit 370 may be implemented by a processing circuit included in the information processing device 300a. Part or all of the process execution unit 30, the communication unit 320, the decoding unit 330, the correction unit 340, the extraction unit 350, the judgment command unit 360 and the feedback unit 370 may be implemented as modules of a program executed by a processor included in the information processing device 300a.

The communication unit 320 receives an encoded image (hereinafter referred to as the first encoded image) from the camera 100a. Further, the communication unit 320 receives an encoded image (hereinafter referred to as the second encoded image) from the camera 200.

The process execution unit 30 executes a decoding process, an extraction process and a judgment command process. Specifically, the decoding process, the extraction process and the judgment command process are executed by the decoding unit 330, the extraction unit 350 and the judgment command unit 360. Thus, the decoding unit 330, the extraction unit 350 and the judgment command unit 360 will be described below. Incidentally, functions of the correction unit 340 will be described later.

The decoding unit 330 decodes the first encoded image and the second encoded image.

Based on the image (hereinafter referred to as the first decoded image) obtained by the decoding of the first encoded image and the image (hereinafter referred to as the second decoded image) obtained by the decoding of the second encoded image, the extraction unit 350 extracts the image quality element value of the first decoded image and the image quality element value of the second decoded image.

The judgment command unit 360 judges the image quality similarity level as the similarity level between the image quality of the first decoded image and the image quality of the second decoded image based on the image quality element value of the first decoded image and the image quality element value of the second decoded image. When the image quality similarity level is higher than or equal to the threshold value, the judgment command unit 360 commands the camera 100a to store at least one of the parameters set to the image capturing unit 103, the parameters set to the image processing unit 104 and the parameters set to the encoding unit 105 in the storage unit 101. When the command is received, the camera 100a stores at least one of the parameters set to the image capturing unit 103, the parameters set to the image processing unit 104 and the parameters set to the encoding unit 105 in the storage unit 101. Incidentally, this storage process may be executed by any unit.

There are cases where the field angle of the first decoded image and the field angle of the second decoded image do not coincide with each other. When the field angles do not coincide with each other, the process execution unit 30 executes the correction process. Specifically, the correction process is executed by the correction unit 340. Thus, the correction unit 340 will be described below.

The correction unit 340 corrects the field angle error between the first decoded image and the second decoded image. When the correction process has been executed, the extraction process and the judgment command process are executed as follows.

Based on an image (hereinafter referred to as the first decoded corrected image) obtained by correcting the first decoded image and an image (hereinafter referred to as the second decoded corrected image) obtained by correcting the second decoded image, the extraction unit 350 extracts the image quality element value of the first decoded corrected image and the image quality element value of the second decoded corrected image.

The judgment command unit 360 judges the image quality similarity level as the similarity level between the image quality of the first decoded corrected image and the image quality of the second decoded corrected image based on the image quality element value of the first decoded corrected image and the image quality element value of the second decoded corrected image. When the image quality similarity level is higher than or equal to the predetermined threshold value, the judgment command unit 360 commands the camera 100a to store at least one of the parameters set to the image capturing unit 103, the parameters set to the image processing unit 104 and the parameters set to the encoding unit 105 in the storage unit 101.

Further, in the correction of the field angle error, it is also possible to correct only the first decoded image with reference to the second decoded image. When only the first decoded image has been corrected, the extraction process and the judgment command process are executed as follows.

The extraction unit 350 extracts the image quality element value of the first decoded corrected image and the image quality element value of the second decoded image based on the first decoded corrected image and the second decoded image.

The judgment command unit 360 judges the image quality similarity level as the similarity level between the image quality of the first decoded corrected image and the image quality of the second decoded image based on the image quality element value of the first decoded corrected image and the image quality element value of the second decoded image. When the image quality similarity level is higher than or equal to the predetermined threshold value, the judgment command unit 360 commands the camera 100a to store at least one of the parameters set to the image capturing unit 103, the parameters set to the image processing unit 104 and the parameters set to the encoding unit 105 in the storage unit 101.

Furthermore, in the correction of the field angle error, it is also possible to correct only the second decoded image with reference to the first decoded image. When only the second decoded image has been corrected, the extraction process and the judgment command process are executed as follows.

The extraction unit 350 extracts the image quality element value of the first decoded image and the image quality element value of the second decoded corrected image based on the first decoded image and the second decoded corrected image.

The judgment command unit 360 judges the image quality similarity level as the similarity level between the image quality of the first decoded image and the image quality of the second decoded corrected image based on the image quality element value of the first decoded image and the image quality element value of the second decoded corrected image. When the image quality similarity level is higher than or equal to the predetermined threshold value, the judgment command unit 360 commands the camera 100a to store at least one of the parameters set to the image capturing unit 103, the parameters set to the image processing unit 104 and the parameters set to the encoding unit 105 in the storage unit 101.

When the image quality similarity level is less than the threshold value, the feedback unit 370 calculates parameters to be set to the image capturing unit 103, the image processing unit 104 and the encoding unit 105 so that the image quality similarity level increases. The communication unit 320 transmits the calculated parameters to the camera 100a. Accordingly, the parameters are received by the communication unit 117. The setting unit 116 sets the parameters to the image capturing unit 103, the image processing unit 104 and the encoding unit 105. Further, the feedback unit 370 may store the calculated parameters in the storage unit 310.

Incidentally, there are cases where the generation unit 106 in the adjustment mode generates the image relevant information. When the image relevant information has been generated, each time the first encoded image and the second encoded image are received, the process execution unit 30 executes the decoding process, the extraction process and a judgment command process of commanding the camera 100a to store at least one of the parameters set to the image capturing unit 103, the parameters set to the image processing unit 104 and the parameters set to the encoding unit 105 and the image relevant information generated in the adjustment mode in the storage unit 101 while associating them with each other when the image quality similarity level is higher than or equal to the threshold value.

When the command is received in the adjustment mode, the camera 100a stores at least one of the parameters set to the image capturing unit 103, the parameters set to the image processing unit 104 and the parameters set to the encoding unit 105 and the image relevant information generated in the adjustment mode in the storage unit 101 while associating them with each other.

Here, it is assumed in the following description that the process execution unit 30 executes the correction process. Further, it is assumed that the generation unit 106 generates the image relevant information.

Next, a process executed in the image quality conversion system will be described below by using a sequence diagram.

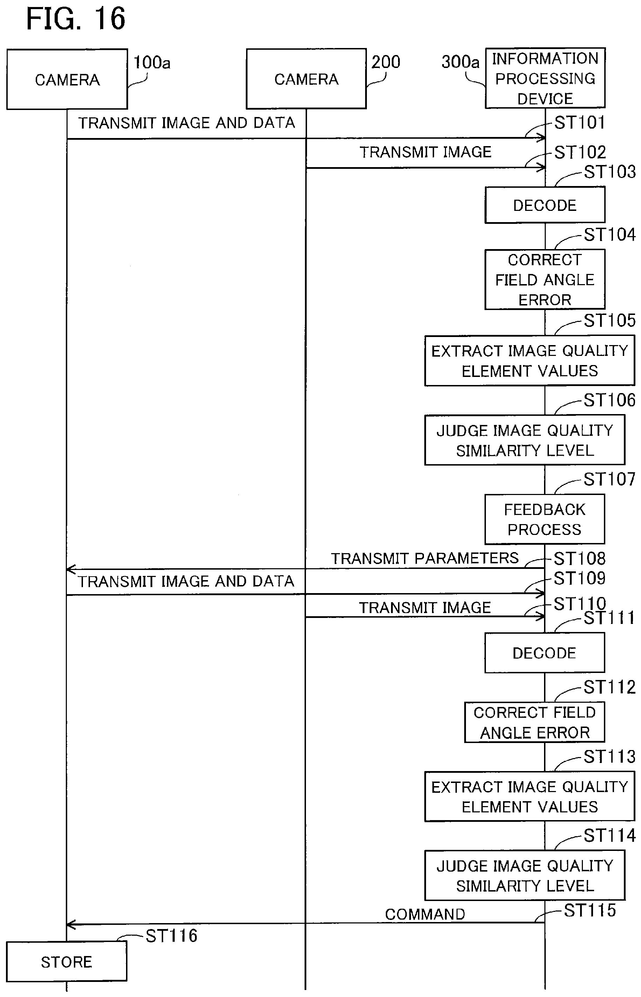

Fig. 16 is a sequence diagram showing an example of the process executed in the image quality conversion system in the third embodiment. The following process is an example of a process in the adjustment mode.

(Step ST101) The image capturing unit 103 of the camera 100a captures an image of an image capture target range based on the parameters that have been set.

The image processing unit 104 of the camera 100a corrects the image obtained by the image capturing by the image capturing unit 103 based on the parameters that have been set.

The encoding unit 105 of the camera 100a encodes the corrected image based on the parameters that have been set.

The generation unit 106 of the camera 100a generates the image relevant information.

The communication unit 117 of the camera 100a transmits the encoded image (i.e., the first encode image), the image relevant information, and the parameters set to the image capturing unit 103, the image processing unit 104 and the encoding unit 105 to the information processing device 300a. Accordingly, the first encode image, the image relevant information and the parameters are received by the communication unit 320. Incidentally, the communication unit 117 does not necessarily have to transmit the image relevant information and the parameters to the information processing device 300a.

(Step ST102) The camera 200 transmits an encoded image (i.e., the second encoded image) to the information processing device 300a. Accordingly, the second encode image is received by the communication unit 320.

(Step ST103) The decoding unit 330 of the information processing device 300a decodes the first encoded image. The decoded image is the first decoded image. Further, the decoding unit 330 of the information processing device 300a decodes the second encoded image. The decoded image is the second decoded image.

(Step ST104) The correction unit 340 of the information processing device 300a corrects the first decoded image and the second decoded image so that the field angle error disappears.

(Step ST105) The extraction unit 350 of the information processing device 300a extracts the image quality element value of the first decoded corrected image and the image quality element value of the second decoded corrected image.

(Step ST106) The judgment command unit 360 of the information processing device 300a judges the image quality similarity level based on the two extracted image quality element values. The image quality similarity level is assumed to be less than the threshold value.

(Step ST107) The feedback unit 370 of the information processing device 300a executes the feedback process. Specifically, the feedback unit 370 calculates parameters to be set to the image capturing unit 103, the image processing unit 104 and the encoding unit 105 so that the image quality similarity level increases. The feedback unit 370 may store the calculated parameters in the storage unit 310.

(Step ST108) The communication unit 320 of the information processing device 300a transmits the calculated parameters to the camera 100a.

The communication unit 117 of the camera 100a receives the parameters. The setting unit 116 of the camera 100a sets the parameters to the image capturing unit 103, the image processing unit 104 and the encoding unit 105.

(Step ST109) The image capturing unit 103 of the camera 100a captures an image of an image capture target range based on the parameters that have been set.

The image processing unit 104 of the camera 100a corrects the image obtained by the image capturing by the image capturing unit 103 based on the parameters that have been set.

The encoding unit 105 of the camera 100a encodes the corrected image based on the parameters that have been set.

The generation unit 106 of the camera 100a generates the image relevant information.

The communication unit 117 of the camera 100a transmits the encoded image (i.e., the first encode image), the image relevant information, and the parameters set to the image capturing unit 103, the image processing unit 104 and the encoding unit 105 to the information processing device 300a. Accordingly, the first encode image, the image relevant information and the parameters are received by the communication unit 320. Incidentally, the communication unit 117 does not necessarily have to transmit the image relevant information and the parameters to the information processing device 300a.

(Step ST110) The camera 200 transmits an encoded image (i.e., the second encoded image) to the information processing device 300a. Accordingly, the second encode image is received by the communication unit 320.

(Step ST111) The decoding unit 330 of the information processing device 300a decodes the first encoded image. The decoded image is the first decoded image. The decoding unit 330 of the information processing device 300a decodes the second encoded image. The decoded image is the second decoded image.

(Step ST112) The correction unit 340 of the information processing device 300a corrects the first decoded image and the second decoded image so that the field angle error disappears.

(Step ST113) The extraction unit 350 of the information processing device 300a extracts the image quality element value of the first decoded corrected image and the image quality element value of the second decoded corrected image.

(Step ST114) The judgment command unit 360 of the information processing device 300a judges the image quality similarity level based on the two extracted image quality element values. The image quality similarity level is assumed to be higher than or equal to the threshold value. The judgment command unit 360 may store the image relevant information and the parameters received in the step ST109 in the storage unit 310.

(Step ST115) judgement command unit 360 of the information processing device 300a commands the camera 100a to store the parameters set to the image capturing unit 103, the parameters set to the image processing unit 104, the parameters set to the encoding unit 105 and the image relevant information in the storage unit 101 while associating them with each other. This command may include the parameters and the image relevant information.

(Step ST116) The communication unit 117 of the camera 100a receives the command. The communication unit 117 stores the parameters and the image relevant information in the storage unit 101. In the case where the parameters and the image relevant information are included in the command, the communication unit 117 stores the parameters and the image relevant information included in the command in the storage unit 101.

Processing by the camera 100a in the normal mode is the same as that by the camera 100. Thus, a description of the camera 100a in the normal mode is omitted here.

According to the third embodiment, the camera 100a in the adjustment mode stores the parameters for adjusting the image quality to image quality equivalent to the image quality of images generated by the camera 200. Then, the camera 100a in the normal mode changes the image quality of an image generated by the camera 100a by using the stored parameters. The image quality changed by the camera 100a is equivalent to the image quality of images generated by the camera 200. Since the equivalent image quality can be realized automatically as above, the user does not need to perform the work. Thus, according to the third embodiment, the image quality conversion system is capable of reducing the load on the user.

Features in the embodiments described above can be appropriately combined with each other.

### DESCRIPTION OF REFERENCE CHARACTERS

1a: processor, 1b: volatile storage device, 1c: nonvolatile storage device, 10, 20, 30: process execution unit, 100, 100a: camera, 101: storage unit, 102: mode switching unit, 103: image capturing unit, 104: image processing unit, 105: encoding unit, 106: generation unit, 107: acquisition unit, 108: decoding unit, 109: correction unit, 110: extraction unit, 111: judgment storage unit, 112: feedback unit, 113: end processing unit, 114: delivery unit, 115: identification unit, 116: setting unit, 117: communication unit, 200: camera, 300, 300a: information processing device, 310: storage unit, 320: communication unit, 330: decoding unit, 340: correction unit, 350: extraction unit, 360: judgment command unit, 370: feedback unit, 400: image quality conversion device, 400a: processor, 400b: volatile storage device, 400c: nonvolatile storage device, 401: storage unit, 402: mode switching unit, 403: image processing unit, 404: encoding unit, 405: generation unit, 406: acquisition unit, 407: decoding unit, 408: correction unit, 409: extraction unit, 410: judgment storage unit, 411: feedback unit, 412: end processing unit, 413: delivery unit, 414: identification unit, 415: setting unit, 500: camera

## Claims

1. An image capturing device (100) that is connectable to a first image capturing device (200), the image capturing device (100) comprising:
a storage unit (101);
an image capturing unit (103) that executes image capturing based on a parameter that has been set;
an image processing unit (104) that corrects an image obtained by the image capturing by the image capturing unit (103) based on a parameter that has been set;
an encoding unit (105) that encodes the corrected image based on a parameter that has been set to provide a first encoded image;
an acquisition unit (107) that acquires a second encoded image, which is an encoded image transmitted from the first image capturing device (200), when the image capturing device (100) is in an adjustment mode;
a process execution unit (10) that executes
a decoding process of decoding the first encoded image to provide a first decoded image and of decoding the second encoded image to provide a second decoded image,
an extraction process
of extracting an image quality element value, which is a value regarding image quality, of the first decoded image and
of extracting the image quality element value of the second decoded image , and
a judgment storage process of judging an image quality similarity level which is a similarity level between the image quality of the first decoded image and the image quality of the second decoded image, the image quality similarity level being judged based on the image quality element value of the first decoded image and the image quality element value of the second decoded image, and of storing at least one of the parameter set to the image capturing unit (103), the parameter set to the image processing unit (104) and the parameter set to the encoding unit (105) in the storage unit (101) when the judged image quality similarity level is higher than or equal to a predetermined threshold value;
a feedback unit (112) that, when the image quality similarity level is less than the threshold value, calculates parameters to be set to the image capturing unit (103), the image processing unit (104) and the encoding unit (105) based on the image quality element value of the first decoded image and the image quality element value of the second decoded image to increase the judged image quality similarity level, and sets the calculated parameters to the image capturing unit (103), the image processing unit (104) and the encoding unit (105); and
a setting unit (116) that sets the parameter stored in the storage unit (101) to at least one of the image capturing unit (103), the image processing unit (104) and the encoding unit (105) when the image capturing device (100) is in a normal mode.

2. The image capturing device according to claim 1, further comprising:
a generation unit (106) that generates image relevant information which is information regarding the image generated by at least one of the image capturing unit (103), the image processing unit (104) and the encoding unit (105) when the image capturing device (100) is in the adjustment mode by executing a process; and
an identification unit (115), wherein
each time the acquisition unit (107) acquires the second encoded image when the image capturing device (100) is in the adjustment mode, the process execution unit (10) executes the decoding process, the extraction process and a judgment storage process of storing at least one of the parameter set to the image capturing unit (103), the parameter set to the image processing unit (104) and the parameter set to the encoding unit (105) and the image relevant information generated when the image capturing device (100) is in the adjustment mode in the storage unit (101) while associating them with each other when the image quality similarity level is higher than or equal to the threshold value,
the generation unit (106) generates image relevant information for an image generated by at least one of the image capturing unit (103), the image processing unit (104) and the encoding unit (105) when the image capturing device (100) is in the normal mode,
when the image capturing device (100) is in the normal mode, the identification unit (115) identifies image relevant information included in the image relevant information stored in the storage unit (101) and coinciding with or similar to the image relevant information generated when the image capturing device (100) is in the normal mode, and
when the image capturing device (100) is in the normal mode, the setting unit (116) sets one or more parameters corresponding to the identified image relevant information to at least one of the image capturing unit (103), the image processing unit (104) and the encoding unit (105).

3. The image capturing device according to any one of claims 1 to 2, wherein the process execution unit (10)
executes a correction process of correcting a field angle error between the first decoded image and the second decoded image,
executes an extraction process of extracting the image quality element value of a first decoded corrected image based on the first decoded corrected image which is an image obtained by correcting the first decoded image and extracting the image quality element value of a second decoded corrected image based on the second decoded corrected image, which is an image obtained by correcting the second decoded image, and
executes a judgment storage process of judging an image quality similarity level which is a similarity level between the image quality of the first decoded corrected image and the image quality of the second decoded corrected image, the image quality similarity level being judged based on the image quality element value of the first decoded corrected image and the image quality element value of the second decoded corrected image, and of storing at least one of the parameter set to the image capturing unit (103), the parameter set to the image processing unit (104) and the parameter set to the encoding unit (105) in the storage unit (101) when the judged image quality similarity level is higher than or equal to the threshold value.

4. The image capturing device according to any one of claims 1 to 2, wherein the process execution unit (10)
executes a correction process of correcting a field angle error between the first decoded image and the second decoded image,
executes an extraction process of extracting the image quality element value of a first decoded corrected image based on the first decoded corrected image which is an image obtained by correcting the first decoded image and extracting the image quality element value of the second decoded image based on the second decoded image, and
executes a judgment storage process of judging an image quality similarity level which is a similarity level between the image quality of the first decoded corrected image and the image quality of the second decoded image, the image quality similarity level being judged based on the image quality element value of the first decoded corrected image and the image quality element value of the second decoded image, and of storing at least one of the parameter set to the image capturing unit (103), the parameter set to the image processing unit (104) and the parameter set to the encoding unit (105) in the storage unit (101) when the judged image quality similarity level is higher than or equal to the threshold value.

5. The image capturing device according to any one of claims 1 to 2, wherein the process execution unit (10)
executes a correction process of correcting a field angle error between the first decoded image and the second decoded image,
executes an extraction process of extracting the image quality element value of the first decoded image based on the first decoded image, and extracting the image quality element value of a second decoded corrected image which is an image obtained by correcting the second decoded image based on the second decoded corrected image, and
executes a judgment storage process of judging an image quality similarity level which is a similarity level between the image quality of the first decoded image and the image quality of the second decoded corrected image, the image quality similarity level being judged based on the image quality element value of the first decoded image and the image quality element value of the second decoded corrected image, and of storing at least one of the parameter set to the image capturing unit (103), the parameter set to the image processing unit (104) and the parameter set to the encoding unit (105) in the storage unit (101) when the judged image quality similarity level is higher than or equal to the threshold value.

6. The image capturing device according to any one of claims 1 to 5, wherein
when the image capturing device (100) is in the adjustment mode, the process execution unit (10) stores the parameter set to the image capturing unit (103), the parameter set to the image processing unit (104) and the parameter set to the encoding unit (105) in the storage unit (101) when the image quality similarity level is higher than or equal to the threshold value, and
when the image capturing device (100) is in the normal mode, the setting unit (116) sets the parameters stored in the storage unit (101) to the image capturing unit (103), the image processing unit (104) and the encoding unit (105).

7. The image capturing device according to any one of claims 1 to 6, wherein the image quality element value is at least one of lightness, saturation, sharpness and a noise amount.

8. An image quality conversion device (400) that is connectable to a first image capturing device (200) that has been adjusted so as to generate images with high image quality, and a second image capturing device (500) that has not been adjusted, the image quality conversion device (400) comprising:
a storage unit (401);
an acquisition unit (406) that acquires a second encoded image as an encoded image transmitted from the first image capturing device (200) and acquires an image obtained by image capturing by the second image capturing device (500) when the image quality conversion device (400) is in an adjustment mode;
an image processing unit (403) that corrects the image obtained by the image capturing by the second image capturing device (500) based on a parameter that has been set;
an encoding unit (404) that encodes the corrected image based on a parameter that has been set to provide a first encoded image;
a process execution unit (20) that executes
a decoding process of decoding the first encoded image to provide a first decoded image, and of decoding the second encoded image to provide a second decoded image,
an extraction process of extracting an image quality element value, which is a value regarding image quality, of the first decoded image and of extracting the image quality element value of the second decoded image, and
a judgment storage process of judging an image quality similarity level which is a similarity level between the image quality of the first decoded image and the image quality of the second decoded image, the image quality similarity level being judged based on the image quality element value of the first decoded image and the image quality element value of the second decoded image and storing at least one of the parameter set to the image processing unit (403) and the parameter set to the encoding unit (404) in the storage unit (401) when the judged image quality similarity level is higher than or equal to a predetermined threshold value;
a feedback unit (411) that, when the image quality similarity level is less than the threshold value, calculates parameters to be set to the image processing unit (403) and the encoding unit (404) based on the image quality element value of the first decoded image and the image quality element value of the second decoded image to increase the judged image quality similarity level, and sets the calculated parameters to the image processing unit (403) and the encoding unit (404); and
a setting unit (415) that sets the parameter stored in the storage unit (401) to at least one of the image processing unit (403) and the encoding unit (404) when the image quality conversion device (400) is in a normal mode.

9. The image quality conversion device according to claim 8, further comprising:
a generation unit (405) that generates image relevant information which is information regarding the image generated by at least one of the image processing unit (403) and the encoding unit (404) when the image quality conversion device (400) is in the adjustment mode by executing a process; and
an identification unit (414), wherein
each time the acquisition unit (406) acquires the image obtained by the image capturing by the second image capturing device (500) and the second encoded image when the image quality conversion device (400) is in the adjustment mode, the process execution unit (20) in the adjustment mode executes the decoding process, the extraction process and a judgment storage process of storing at least one of the parameter set to the image processing unit (403) and the parameter set to the encoding unit (404) and the image relevant information generated when the image quality conversion device (400) is in the adjustment mode in the storage unit (401) while associating them with each other when the image quality similarity level is higher than or equal to the threshold value,
the generation unit (405) generates the image relevant information for an image generated by at least one of the image processing unit (403) and the encoding unit (404) when the image quality conversion device (400) is in the normal mode,
when the image quality conversion device (400) is in the normal mode, the identification unit (414) identifies image relevant information included in the image relevant information stored in the storage unit (401) and coinciding with or similar to the image relevant information generated in the normal mode, and
when the image quality conversion device (400) is in the normal mode, the setting unit (415) sets one or more parameters corresponding to the identified image relevant information to at least one of the image processing unit (403) and the encoding unit (404).

10. An image quality conversion system comprising:
a first image capturing device (200);
a second image capturing device (100a); and
an information processing device (300a), wherein
the second image capturing device (100a) includes a storage unit (101), an image capturing unit (103) that executes image capturing based on a parameter that has been set, an image processing unit (104) that corrects an image obtained by the image capturing by the image capturing unit (103) based on a parameter that has been set, and an encoding unit (105) that encodes the corrected image based on a parameter that has been set,
the second image capturing device (100a), when in an adjustment mode, transmits a first encoded image as the image encoded by the encoding unit (105) to the information processing device (300a),
the information processing device (300a) receives the first encoded image from the second image capturing device (100a), receives a second encoded image as an encoded image from the first image capturing device (200), and executes
a decoding process of decoding the first encoded image to provide a first decoded image and of decoding the second encoded image to provide a second decoded image,
an extraction process of extracting an image quality element value, which is a value regarding image quality, of the first decoded image and of extracting the image quality element value of the second decoded image, and
a judgment command process of judging an image quality similarity level which is a similarity level between the image quality of the first decoded image and the image quality of the second decoded image, the image quality similarity level being judged based on the image quality element value of the first decoded image and the image quality element value of the second decoded image, and of commanding the second image capturing device (100a) to store at least one of the parameter set to the image capturing unit (103), the parameter set to the image processing unit (104) and the parameter set to the encoding unit (105) in the storage unit (101) when the judged image quality similarity level is higher than or equal to a predetermined threshold value, and
a feedback process of calculating parameters to be set to the image capturing unit (103), the image processing unit (104) and the encoding unit (105) based on the image quality element value of the first decoded image and the image quality element value of the second decoded image to increase the judged image quality similarity level when the judged image quality similarity level is lower than the predetermined threshold value;
the second image capturing device (100a) receiving the command when the second image capturing device (100a) is in the adjustment mode stores at least one of the parameter set to the image capturing unit (103), the parameter set to the image processing unit (104) and the parameter set to the encoding unit (105) in the storage unit, and
when the second image capturing device (100a) is in a normal mode, the second image capturing device (100a)sets the parameter stored in the storage unit (101) to at least one of the image capturing unit (103), the image processing unit (104) and the encoding unit (105).

11. The image quality conversion system according to claim 10, wherein
the second image capturing device (100a) generates image relevant information which is information regarding the image generated by at least one of the image capturing unit (103), the image processing unit (104) and the encoding unit (105) when the second image capturing device (100a) is in the adjustment mode by executing a process,
each time the first encoded image and the second encoded image are received, the information processing device (300a) executes the decoding process, the extraction process and a judgment command process of commanding the second image capturing device (100a) to store at least one of the parameter set to the image capturing unit (103), the parameter set to the image processing unit (104) and the parameter set to the encoding unit (105) and the image relevant information generated when the second image capturing device (100a) is in the adjustment mode in the storage unit (101) while associating them with each other when the image quality similarity level is higher than or equal to the threshold value,
the second image capturing device (100a) receiving the command when the second image capturing device (100a) is in the adjustment mode stores at least one of the parameter set to the image capturing unit (103), the parameter set to the image processing unit (104) and the parameter set to the encoding unit (105) and the image relevant information generated when the second image capturing device (100a) is in the adjustment mode in the storage unit (101) while associating them with each other, and
the second image capturing device (100a) generates image relevant information for an image generated by at least one of the image capturing unit (103), the image processing unit (104) and the encoding unit (105) when the second image capturing device (100a) is in the normal mode , identifies image relevant information included in the image relevant information stored in the storage unit (101) and coinciding with or similar to the image relevant information generated when the second image capturing device (100a) is in the normal mode, and sets one or more parameters corresponding to the identified image relevant information to at least one of the image capturing unit (103), the image processing unit (104) and the encoding unit (105).

12. The image quality conversion system according to claim 10 or 11, wherein the information processing device (300a)
executes a correction process of correcting a field angle error between the first decoded image and the second decoded image,
executes an extraction process of extracting the image quality element value of a first decoded corrected image based on the first decoded corrected image which is an image obtained by correcting the first decoded image and extracting the image quality element value of a second decoded corrected image based on second decoded corrected image which is an image obtained by correcting the second decoded image, and
executes a judgment command process of judging an image quality similarity level which is a similarity level between the image quality of the first decoded corrected image and the image quality of the second decoded corrected image, the image quality similarity level being judged based on the image quality element value of the first decoded corrected image and the image quality element value of the second decoded corrected image, and of commanding the second image capturing device (100a) to store at least one of the parameter set to the image capturing unit (103), the parameter set to the image processing unit (104) and the parameter set to the encoding unit (105) in the storage unit (101) when the judged image quality similarity level is higher than or equal to the threshold value.

13. The image quality conversion system according to claim 10 or 11, wherein the information processing device (300a)
executes a correction process of correcting a field angle error between the first decoded image and the second decoded image,
executes an extraction process of extracting the image quality element value of a first decoded corrected image based on the first decoded corrected image which is an image obtained by correcting the first decoded image and the image quality element value of the second decoded image based on the second decoded image, and
executes a judgment command process of judging an image quality similarity level as a similarity level between the image quality of the first decoded corrected image and the image quality of the second decoded image, the image quality similarity level being judged based on the image quality element value of the first decoded corrected image and the image quality element value of the second decoded image, and of commanding the second image capturing device (100a) to store at least one of the parameter set to the image capturing unit (103), the parameter set to the image processing unit (104) and the parameter set to the encoding unit (105) in the storage unit (101) when the judged image quality similarity level is higher than or equal to the threshold value.

14. The image quality conversion system according to claim 10 or 11, wherein the information processing device (300a)
executes a correction process of correcting a field angle error between the first decoded image and the second decoded image,
executes an extraction process of extracting the image quality element value of the first decoded image based on the first decoded image, and extracting the image quality element value of a second decoded corrected image based on the second decoded corrected image which is an image obtained by correcting the second decoded image, and
executes a judgment command process of judging an image quality similarity level which is a similarity level between the image quality of the first decoded image and the image quality of the second decoded corrected image, the image quality similarity level being judged based on the image quality element value of the first decoded image and the image quality element value of the second decoded corrected image and commanding the second image capturing device (100a) to store at least one of the parameter set to the image capturing unit (103), the parameter set to the image processing unit (104) and the parameter set to the encoding unit (105) in the storage unit (101) when the judged image quality similarity level is higher than or equal to the threshold value.

## Patentansprüche

1. Bildaufnahmevorrichtung (100), die mit einer ersten Bildaufnahmevorrichtung (200() verbindbar ist, wobei die Bildaufnahmevorrichtung (100) Folgendes umfasst:
eine Speichereinheit (101);
eine Bildaufnahmeeinheit (103), die die Bildaufnahme basierend auf einem Parameter, der eingestellt wurde, ausführt;
eine Bildverarbeitungseinheit (104), die ein Bild, das durch die Bildaufnahme von der Bildaufnahmeeinheit (103) erhalten wird, basierend auf einem Parameter, der eingestellt wurde, korrigiert;
eine Verschlüsselungseinheit (105), die das korrigierte Bild basierend auf einem Parameter verschlüsselt, der eingestellt wurde, um ein erstes verschlüsseltes Bild bereitzustellen;
eine Erfassungseinheit (107), die ein zweites verschlüsseltes Bild erfasst, das ein verschlüsseltes Bild ist, das von der ersten Bildaufnahmevorrichtung (200) übertragen wurde, wenn sich die Bildaufnahmevorrichtung (100) in einem Einstellmodus befindet;
eine Verfahrensausführungseinheit (10), die Folgendes ausführt:
ein Entschlüsselungsverfahren des Entschlüsselns des ersten verschlüsselten Bilds, um ein erstes entschlüsseltes Bild bereitzustellen und des Entschlüsselns des zweiten verschlüsselten Bilds, um ein zweites entschlüsseltes Bild bereitzustellen,
ein Extraktionsverfahren des Extrahierens eines Bildqualitätselementwerts, der ein Wert betreffend die Bildqualität ist, des ersten entschlüsselten Bilds und des Extrahierens des Bildqualitätselementwerts des zweiten entschlüsselten Bilds, und
ein Beurteilungsspeicherverfahren des Beurteilens eines Bildqualitätsähnlichkeitsgrads, der ein Ähnlichkeitsgrad zwischen der Bildqualität des ersten entschlüsselten Bilds und der Bildqualität des zweiten entschlüsselten Bilds ist, wobei der Bildqualitätsähnlichkeitsgrad basierend auf dem Bildqualitätselementwert des ersten entschlüsselten Bilds und dem Bildqualitätselementwert des zweiten entschlüsselten Bilds beurteilt wird, und des Speicherns von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich einem vorbestimmten Schwellenwert ist;
eine Rückmeldeeinheit (112), die, wenn der Bildqualitätsähnlichkeitsgrad kleiner ist als der Schwellenwert, Parameter, die an der Bildaufnahmeeinheit (103), der Bildverarbeitungseinheit (104) und der Verschlüsselungseinheit (105) einzustellen sind, basierend auf dem Bildqualitätselementwert des ersten entschlüsselten Bilds und dem Bildqualitätselementwert des zweiten entschlüsselten Bilds berechnet, um den beurteilten Bildqualitätsähnlichkeitsgrad zu erhöhen, und die die berechneten Parameter an der Bildaufnahmeeinheit (103), der Bildverarbeitungseinheit (104) und der Verschlüsselungseinheit (105) einstellt; und
eine Einstelleinheit (116), die den in der Speichereinheit (101) gespeicherten Parameter auf zumindest eine aus der Bildaufnahmeeinheit (103), der Bildverarbeitungseinheit (104) und der Verschlüsselungseinheit (105) einstellt, wenn die Bildaufnahmevorrichtung (100) in einem Normalmodus ist.

2. Bildaufnahmevorrichtung nach Anspruch 1, die ferner Folgendes umfasst:
eine Erstellungseinheit (106), die bildrelevante Informationen erstellt, die Informationen bezüglich des Bilds sind, die durch zumindest eine aus der Bildaufnahmeeinheit (103), der Bildverarbeitungseinheit (104) und der Verschlüsselungseinheit (105) erstellt wurden, wenn die Bildaufnahmevorrichtung (100) in dem Einstellmodus ist, indem ein Verfahren ausgeführt wird; und
eine Identifikationseinheit (115), wobei jedes Mal, wenn die Erfassungseinheit (107) das zweite verschlüsselte Bild erfasst, wenn die Bildaufnahmevorrichtung (100) in dem Einstellmodus ist, die Verfahrensausführungseinheit (10) das Entschlüsselungsverfahren, das Extraktionsverfahren und ein Beurteilungsspeicherverfahren des Speicherns von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, und der bildrelevanten Informationen, die erstellt wurden, wenn die Bildaufnahmevorrichtung (100) in dem Einstellmodus ist, in der Speichereinheit (101) ausführt, während diese einander zugeordnet werden, wenn der Bildqualitätsähnlichkeitsgrad größer als oder gleich dem Schwellenwert ist,
wobei die Erstellungseinheit (106) bildrelevante Informationen für ein Bild erstellt, die durch zumindest eine aus der Bildaufnahmevorrichtung (103), der Bildverarbeitungseinheit (104) und der Verschlüsselungseinheit (105) erstellt wurden, wenn die Bildaufnahmevorrichtung (100) in dem Normalmodus ist,
wobei, wenn die Bildaufnahmevorrichtung (100) in dem Normalmodus ist, die Identifikationseinheit (115) bildrelevante Informationen identifiziert, die in den bildrelevanten Informationen enthalten sind, die in der Speichereinheit (101) gespeichert sind, und die mit den bildrelevanten Informationen, die erstellt wurden, wenn die Bildaufnahmevorrichtung (100) in dem Normalmodus ist, übereinstimmen oder diesen ähnlich sind, und
wenn die Bildaufnahmevorrichtung (100) in dem Normalmodus ist, die Einstelleinheit (116) einen oder mehrere Parameter, die den identifizierten bildrelevanten Informationen entsprechen, an zumindest einer aus der Bildaufnahmeeinheit (103), der Bildverarbeitungseinheit (104) und der Verschlüsselungseinheit (105) einstellt.

3. Bildaufnahmevorrichtung nach einem der Ansprüche 1 bis 2, wobei die Verfahrensausführungseinheit (10):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts eines ersten entschlüsselten korrigierten Bilds basierend auf dem ersten entschlüsselten korrigierten Bild, das ein Bild ist, das durch Korrigieren des ersten entschlüsselten Bilds erhalten wurde, und des Extrahierens des Bildqualitätselementwerts eines zweiten entschlüsselten korrigierten Bilds basierend auf dem zweiten entschlüsselten korrigierten Bild, das ein Bild ist, das durch Korrigieren des zweiten entschlüsselten Bilds erhalten wurde, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten korrigierten Bilds und der Bildqualität des zweiten entschlüsselten korrigierten Bilds ist, ausführt, wobei der Bildqualitätsähnlichkeitsgrad basierend auf dem Bildqualitätselementwert des ersten entschlüsselten korrigierten Bilds und dem Bildqualitätselementwert des zweiten entschlüsselten korrigierten Bilds beurteilt wird, und des Speicherns von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn das beurteilte Bildqualitätsähnlichkeitsgrad größer als oder gleich dem Schwellenwert ist.

4. Bildaufnahmevorrichtung nach einem der Ansprüche 1 bis 2, wobei die Verfahrensausführungseinheit (10):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts eines ersten entschlüsselten korrigierten Bilds basierend auf dem ersten entschlüsselten korrigierten Bild, das ein Bild ist, das durch Korrigieren des ersten entschlüsselten Bilds erhalten wurde, und des Extrahierens des Bildqualitätselementwerts des zweiten entschlüsselten Bilds basierend auf dem zweiten entschlüsselten Bild, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten korrigierten Bilds und der Bildqualität des zweiten entschlüsselten Bilds ist, ausführt, wobei der Bildqualitätsähnlichkeitsgrad basierend auf dem Bildqualitätselementwert des ersten entschlüsselten korrigierten Bilds und dem Bildqualitätselementwert des zweiten entschlüsselten Bilds beurteilt wird, und des Speicherns von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich dem Schwellenwert ist.

5. Bildaufnahmevorrichtung nach einem der Ansprüche 1 bis 2, wobei die Verfahrensausführungseinheit (10):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts des ersten entschlüsselten korrigierten Bilds basierend auf dem ersten entschlüsselten korrigierten Bild, und des Extrahierens des Bildqualitätselementwerts eines zweiten entschlüsselten korrigierten Bilds, das ein Bild ist, das durch Korrigieren des zweiten entschlüsselten Bilds basierend auf dem zweiten entschlüsselten korrigierten Bild erhalten wurde, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten Bilds und der Bildqualität des zweiten entschlüsselten korrigierten Bilds ist, ausführt, wobei der Bildqualitätsähnlichkeitsgrad basierend auf dem Bildqualitätselementwert des ersten entschlüsselten Bilds und dem Bildqualitätselementwert des zweiten entschlüsselten korrigierten Bilds beurteilt wird, und des Speicherns von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich dem Schwellenwert ist.

6. Bildaufnahmevorrichtung nach einem der Ansprüche 1 bis 5, wobei:
wenn die Bildaufnahmevorrichtung (100) in dem Einstellmodus isst, die Verfahrensausführungseinheit (10) den Parameter, der an der Bildaufnahmeeinheit (103) eingestellt wurde, den Parameter, der an der Bildverarbeitungseinheit (104) eingestellt wurde, und den Parameter, der an der Verschlüsselungseinheit (105) eingestellt wurde, in der Speichereinheit (101) speichert, wenn der beurteilte Bildqualitätsähnlichkeitsgrad größer als oder gleich dem Schwellenwert ist, und
wenn die Bildaufnahmevorrichtung (100) in dem Normalmodus ist, die Einstelleinheit (116) die Parameter, die in der Speichereinheit (101) gespeichert sind, an der Bildaufnahmevorrichtung (103), der Bildverarbeitungsvorrichtung (104) und der Verschlüsselungseinheit (105) einstellt.

7. Bildaufnahmevorrichtung nach einem der Ansprüche 1 bis 6, wobei der Bildqualitätselementwert zumindest einer aus Helligkeit, Sättigung, Schärfe und einer Rauschmenge ist.

8. Bildqualitätsumwandlungsvorrichtung (400), die mit einer ersten Bildaufnahmevorrichtung (200), die eingestellt wurde, um Bilder mit hoher Bildqualität zu erstellen, und einer zweiten Bildaufnahmevorrichtung (500), die nicht eingestellt wurde, verbindbar ist, wobei die Bildqualitätsumwandlungsvorrichtung (400) Folgendes umfasst:
eine Speichereinheit (401);
eine Erfassungseinheit (406), die ein zweites verschlüsseltes Bild als ein verschlüsseltes Bild erfasst, das von der ersten Bildaufnahmevorrichtung (200) übertragen wurde, und ein Bild erfasst, das durch Bildaufnahme durch die zweite Bildaufnahmevorrichtung (500) erhalten wurde, wenn die Bildqualitätsumwandlungsvorrichtung (400) in einem Einstellmodus ist;
eine Bildverarbeitungseinheit (403), die das Bild, das durch die Bildaufnahme von der zweiten Bildaufnahmeeinheit (500) erhalten wird, basierend auf einem Parameter, der eingestellt wurde, korrigiert;
eine Verschlüsselungseinheit (404), die das korrigierte Bild basierend auf einem Parameter verschlüsselt, der eingestellt wurde, um ein erstes verschlüsseltes Bild bereitzustellen;
eine Verfahrensausführungseinheit (20), die Folgendes ausführt:
ein Entschlüsselungsverfahren des Entschlüsselns des ersten verschlüsselten Bilds, um ein erstes entschlüsseltes Bild bereitzustellen, und des Entschlüsselns des zweiten verschlüsselten Bilds, um ein zweites entschlüsseltes Bild bereitzustellen,
ein Extraktionsverfahren des Extrahierens eines Bildqualitätselementwerts, der ein Wert betreffend die Bildqualität ist, des ersten entschlüsselten Bilds und des Extrahierens des Bildqualitätselementwerts des zweiten entschlüsselten Bilds, und
ein Beurteilungsspeicherverfahren des Beurteilens eines Bildqualitätsähnlichkeitsgrads, der ein Ähnlichkeitsgrad zwischen der Bildqualität des ersten entschlüsselten Bilds und der Bildqualität des zweiten entschlüsselten Bilds ist, wobei der Bildqualitätsähnlichkeitsgrad basierend auf dem Bildqualitätselementwert des ersten entschlüsselten Bilds und dem Bildqualitätselementwert des zweiten entschlüsselten Bilds beurteilt wird, und des Speicherns von zumindest einem aus dem Parameter, der an der Bildverarbeitungseinheit (403) eingestellt wurde, und dem Parameter, der an der Verschlüsselungseinheit (404) eingestellt wurde, in der Speichereinheit (401), wenn der beurteilte Bildqualitätsähnlichkeitsgrad größer als oder gleich einem vorbestimmten Schwellenwert ist;
eine Rückmeldeeinheit (411), die, wenn der Bildqualitätsähnlichkeitsgrad kleiner ist als der Schwellenwert, Parameter, die an der Bildverarbeitungseinheit (403) und der Verschlüsselungseinheit (404) einzustellen sind, basierend auf dem Bildqualitätselementwert des ersten entschlüsselten Bilds und dem Bildqualitätselementwert des zweiten entschlüsselten Bilds berechnet, um den beurteilten Bildqualitätsähnlichkeitsgrad zu erhöhen, und die die berechneten Parameter an der der Bildverarbeitungseinheit (403) und der Verschlüsselungseinheit (404) einstellt; und
eine Einstelleinheit (415), die den in der Speichereinheit (401) gespeicherten Parameter auf zumindest eine aus der Bildverarbeitungseinheit (403) und der Verschlüsselungseinheit (404) einstellt, wenn die Bildqualitätsumwandlungsvorrichtung (400) in einem Normalmodus ist.

9. Bildqualitätsumwandlungsvorrichtung nach Anspruch 8, die ferner Folgendes umfasst:
eine Erstellungseinheit (405), die bildrelevante Informationen erstellt, die Informationen bezüglich des Bilds sind, die durch zumindest eine aus der Bildverarbeitungseinheit (403) und der Verschlüsselungseinheit (404) erstellt wurden, wenn die Bildqualitätsumwandlungsvorrichtung (400) in dem Einstellmodus ist, indem ein Verfahren ausgeführt wird; und
eine Identifikationseinheit (414), wobei jedes Mal, wenn die Erfassungseinheit (406) das Bild, das durch Bildaufnahme durch die zweite Bildaufnahmevorrichtung (500) erhalten wurde, und das zweite verschlüsselte Bild erfasst, wenn die Bildqualitätsumwandlungsvorrichtung (400) in dem Einstellmodus ist, die Verfahrensausführungseinheit (20) in dem Einstellmodus das Entschlüsselungsverfahren, das Extraktionsverfahren und ein Beurteilungsspeicherverfahren des Speicherns von zumindest einem aus dem Parameter, der an der Bildverarbeitungseinheit (403) eingestellt wurde, und dem Parameter, der an der Verschlüsselungseinheit (404) eingestellt wurde, und der bildrelevanten Informationen, die erstellt wurden, wenn die Bildqualitätsumwandlungsvorrichtung (400) in dem Einstellmodus ist, in der Speichereinheit (401) ausführt, während diese einander zugeordnet werden, wenn der Bildqualitätsähnlichkeitsgrad größer oder gleich dem Schwellenwert ist,
wobei die Erstellungseinheit (405) die bildrelevanten Informationen für ein Bild erstellt, das durch zumindest eine aus der Bildverarbeitungseinheit (403) und der Verschlüsselungseinheit (404) erstellt wurde, wenn die Bildqualitätsumwandlungsvorrichtung (400) in dem Normalmodus ist,
wobei, wenn die Bildqualitätsumwandlungsvorrichtung (400) in dem Normalmodus ist, die Identifikationseinheit (414) bildrelevante Informationen identifiziert, die in den bildrelevanten Informationen enthalten sind, die in der Speichereinheit (401) gespeichert sind, und die mit den bildrelevanten Informationen, die im Normalmodus erstellt wurden, übereinstimmen oder diesen ähnlich sind, und
wenn die Bildqualitätsumwandlungsvorrichtung (400) in dem Normalmodus ist, die Einstelleinheit (415) einen oder mehrere Parameter, die den identifizierten bildrelevanten Informationen entsprechen, an zumindest einer aus der Bildverarbeitungseinheit (403) und der Verschlüsselungseinheit (404) einstellt.

10. Bildqualitätsumwandlungssystem, umfassend:
eine erste Bildaufnahmevorrichtung (200);
eine zweite Bildaufnahmevorrichtung (100a); und
eine Informationsverarbeitungsvorrichtung (300a),
wobei:
die zweite Bildaufnahmevorrichtung (100a) eine Speichereinheit (101), eine Bildaufnahmeeinheit (103), die eine Bildaufnahme basierend auf einem Parameter ausführt, der eingestellt wurde, eine Bildverarbeitungseinheit (104), die ein Bild, das durch Bildaufnahme durch die Bildaufnahmeeinheit (103) erhalten wurde, basierend auf einem Parameter, der eingestellt wurde, korrigiert, und eine Verschlüsselungseinheit (105), die das korrigierte Bild basierend auf einem Parameter verschlüsselt, der eingestellt wurde,
wobei die zweite Bildaufnahmevorrichtung (100a), wenn diese in einem Einstellmodus ist, ein erstes verschlüsseltes Bild als das Bild, das durch die Verschlüsselungseinheit (105) verschlüsselt wurde, an die Informationsverarbeitungsvorrichtung (300a) überträgt,
wobei die Informationsverarbeitungsvorrichtung (300a) das erste verschlüsselte Bild von der zweiten Bildaufnahmevorrichtung (100a) empfängt, ein zweites verschlüsseltes Bild als ein verschlüsseltes Bild von der ersten Bildaufnahmevorrichtung (200) empfängt und Folgendes ausführt:
ein Entschlüsselungsverfahren des Entschlüsselns des ersten verschlüsselten Bilds, um ein erstes entschlüsseltes Bild bereitzustellen und des Entschlüsselns des zweiten verschlüsselten Bilds, um ein zweites entschlüsseltes Bild bereitzustellen,
ein Extraktionsverfahren des Extrahierens eines Bildqualitätselementwerts, der ein Wert betreffend die Bildqualität ist, des ersten entschlüsselten Bilds und des Extrahierens des Bildqualitätselementwerts des zweiten entschlüsselten Bilds, und
ein Beurteilungsspeicherverfahren des Beurteilens eines Bildqualitätsähnlichkeitsgrads, der ein Ähnlichkeitsgrad zwischen der Bildqualität des ersten entschlüsselten Bilds und der Bildqualität des zweiten entschlüsselten Bilds ist, wobei der Bildqualitätsähnlichkeitsgrad basierend auf dem Bildqualitätselementwert des ersten entschlüsselten Bilds und dem Bildqualitätselementwert des zweiten entschlüsselten Bilds beurteilt wird, und des Befehlens der zweiten Bildaufnahmevorrichtung (100a) zum Speichern von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer oder gleich einem vorbestimmten Schwellenwert ist, und
ein Rückmeldeverfahren des Berechnens von Parametern, die an der Bildaufnahmeeinheit (103), der Bildverarbeitungseinheit (104) und der Verschlüsselungseinheit (105) einzustellen sind, basierend auf dem Bildqualitätselementwert des ersten entschlüsselten Bilds und dem Bildqualitätselementwert des zweiten entschlüsselten Bilds, um den beurteilten Bildqualitätsähnlichkeitsgrad zu erhöhen, wenn der beurteilte Bildqualitätsähnlichkeitsgrad geringer ist als der vorbestimmte Schwellenwert;
wobei die zweite Bildaufnahmevorrichtung (100a), die den Befehl empfängt, wenn die zweite Bildaufnahmevorrichtung (100a) im Einstellmodus ist, zumindest einen aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit speichert, und
wenn die zweite Bildaufnahmevorrichtung (100a) in einem Normalmodus ist, die zweite Bildaufnahmevorrichtung (100a) die in der Speichereinheit (101) gespeicherten Parameter an zumindest einer aus der Bildaufnahmeeinheit (103), der Bildverarbeitungseinheit (104) und der Verschlüsselungseinheit (105) einstellt.

11. Bildqualitätsumwandlungssystem nach Anspruch 10, wobei
die zweite Bildaufnahmevorrichtung (100a) bildrelevante Informationen erstellt, die Informationen bezüglich des Bilds sind, das durch zumindest eine aus der Bildaufnahmeeinheit (103), der Bildverarbeitungseinheit (104) und der Verschlüsselungseinheit (105) erstellt wurde, wenn die zweite Bildaufnahmevorrichtung (100a) in dem Einstellmodus ist, indem ein Verfahren ausgeführt wird; und
wobei jedes Mal, wenn das erste verschlüsselte Bild und das zweite verschlüsselte Bild empfangen werden, die Informationsverarbeitungsvorrichtung (300a) das Entschlüsselungsverfahren, das Extraktionsverfahren und ein Beurteilungsspeicherverfahren des Befehlens der zweiten Bildaufnahmevorrichtung (100a) zum Speichern von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, und der bildrelevanten Informationen, die erstellt wurden, wenn die zweite Bildaufnahmevorrichtung (100a) in dem Einstellmodus ist, in der Speichereinheit (101), während diese einander zugeordnet werden, wenn der Bildqualitätsähnlichkeitsgrad größer als oder gleich dem Schwellenwert ist,
wobei die zweite Bildaufnahmevorrichtung (100a), die den Befehl empfängt, wenn die zweite Bildaufnahmevorrichtung (100a) in dem Einstellmodus ist, zumindest einen aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, und die bildrelevanten Informationen, die erstellt wurden, wenn die zweite Bildaufnahmevorrichtung (100a) in dem Einstellmodus ist, in der Speichereinheit (101) speichert, während diese einander zugeordnet werden, und
wobei die zweite Bildaufnahmevorrichtung (100a) bildrelevante Informationen für ein Bild erstellt, die durch zumindest eine aus der Bildaufnahmevorrichtung (103), der Bildverarbeitungseinheit (104) und der Verschlüsselungseinheit (105) erstellt wurden, wenn die zweite Bildaufnahmevorrichtung (100a) in dem Normalmodus ist, bildrelevante Informationen identifiziert, die in den bildrelevanten Informationen enthalten sind, die in der Speichereinheit (101) gespeichert sind, und die mit den bildrelevanten Informationen, die erstellt wurden, wenn die zweite Bildaufnahmevorrichtung (100a) in dem Normalmodus ist, übereinstimmen oder diesen ähnlich sind, und einen oder mehrere Parameter, die den identifizierten bildrelevanten Informationen entsprechen, an zumindest einer aus der Bildaufnahmeeinheit (103), der Bildverarbeitungseinheit (104) und der Verschlüsselungseinheit (105) einstellt.

12. Bildqualitätsumwandlungssystem nach Anspruch 10 oder 11, wobei die Informationsverarbeitungsvorrichtung (300a):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts eines ersten entschlüsselten korrigierten Bilds basierend auf dem ersten entschlüsselten korrigierten Bild, das ein Bild ist, das durch Korrigieren des ersten entschlüsselten Bilds erhalten wurde, und des Extrahierens des Bildqualitätselementwerts eines zweiten entschlüsselten korrigierten Bilds basierend auf dem zweiten entschlüsselten korrigierten Bild, das ein Bild ist, das durch Korrigieren des zweiten entschlüsselten Bilds erhalten wurde, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten korrigierten Bilds und der Bildqualität des zweiten entschlüsselten korrigierten Bilds ist, ausführt, wobei der Bildqualitätsähnlichkeitsgrad basierend auf dem Bildqualitätselementwert des ersten entschlüsselten korrigierten Bilds und dem Bildqualitätselementwert des zweiten entschlüsselten korrigierten Bilds beurteilt wird, und des Befehlens der zweiten Bildaufnahmevorrichtung (100a) zum Speichern von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich einem vorbestimmten Schwellenwert ist.

13. Bildqualitätsumwandlungssystem nach Anspruch 10 oder 11, wobei die Informationsverarbeitungsvorrichtung (300a):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts eines ersten entschlüsselten korrigierten Bilds basierend auf dem ersten entschlüsselten korrigierten Bild, das ein Bild ist, das durch Korrigieren des ersten entschlüsselten Bilds erhalten wurde, und des Bildqualitätselementwerts eines zweiten entschlüsselten Bilds basierend auf dem zweiten entschlüsselten Bild, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten korrigierten Bilds und der Bildqualität des zweiten entschlüsselten Bilds ist, ausführt, wobei der Bildqualitätsähnlichkeitsgrad basierend auf dem Bildqualitätselementwert des ersten entschlüsselten korrigierten Bilds und dem Bildqualitätselementwert des zweiten entschlüsselten Bilds beurteilt wird, und des Befehlens der zweiten Bildaufnahmevorrichtung (100a) zum Speichern von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich einem vorbestimmten Schwellenwert ist.

14. Bildqualitätsumwandlungssystem nach Anspruch 10 oder 11, wobei die Informationsverarbeitungsvorrichtung (300a):
ein Korrekturverfahren des Korrigierens eines Feldwinkelfehlers zwischen dem ersten entschlüsselten Bild und dem zweiten entschlüsselten Bild ausführt,
ein Extraktionsverfahren des Extrahierens des Bildqualitätselementwerts des ersten entschlüsselten korrigierten Bilds basierend auf dem ersten entschlüsselten korrigierten Bild, und des Extrahierens des Bildqualitätselementwerts eines zweiten entschlüsselten korrigierten Bilds, das ein Bild ist, das durch Korrigieren des zweiten entschlüsselten Bilds basierend auf dem zweiten entschlüsselten korrigierten Bild erhalten wurde, ausführt und
ein Beurteilungsspeicherverfahren des Beurteilens eines Bildqualitätsähnlichkeitsgrads, der ein Ähnlichkeitsgrad zwischen der Bildqualität des ersten entschlüsselten Bilds und der Bildqualität des zweiten entschlüsselten korrigierten Bilds ist, ausführt, wobei der Bildqualitätsähnlichkeitsgrad basierend auf dem Bildqualitätselementwert des ersten entschlüsselten Bilds und dem Bildqualitätselementwert des zweiten entschlüsselten korrigierten Bilds beurteilt wird, und des Befehlens der zweiten Bildaufnahmevorrichtung (100a) zum Speichern von zumindest einem aus dem Parameter, der an der Bildaufnahmeeinheit (103) eingestellt wurde, dem Parameter, der an der Bildverarbeitungseinheit (104) eingestellt wurde, und dem Parameter, der an der Verschlüsselungseinheit (105) eingestellt wurde, in der Speichereinheit (101), wenn der beurteilte Bildqualitätsähnlichkeitsgrad größer als oder gleich einem vorbestimmten Schwellenwert ist.

## Revendications

1. Dispositif de capture d'image (100) pouvant être connecté à un premier dispositif de capture d'image (200), le dispositif de capture d'image (100) comprenant :
une unité de stockage (101) ;
une unité de capture d'image (103) qui exécute une capture d'image sur la base d'un paramètre qui a été défini ;
une unité de traitement d'image (104) qui corrige une image obtenue par la capture d'image par l'unité de capture d'image (103) sur la base d'un paramètre qui a été défini ;
une unité de codage (105) qui code l'image corrigée sur la base d'un paramètre qui a été défini pour fournir une première image codée ;
une unité d'acquisition (107) qui acquiert une deuxième image codée, qui est une image codée transmise par le premier dispositif de capture d'image (200), lorsque le dispositif de capture d'image (100) est en mode de réglage ;
une unité d'exécution de processus (10) qui exécute
un processus de décodage consistant à décoder la première image codée pour fournir une première image décodée et à décoder la deuxième image codée pour fournir une deuxième image décodée ;
un processus d'extraction consistant à
extraire une valeur d'élément de qualité d'image, qui est une valeur concernant une qualité d'image, de la première image décodée ; et
extraire la valeur d'élément de qualité d'image de la deuxième image décodée ; et
un processus de stockage de jugement consistant à juger un niveau de similitude de qualité d'image qui est un niveau de similitude entre la qualité d'image de la première image décodée et la qualité d'image de la deuxième image décodée, le niveau de similitude de qualité d'image étant jugé sur la base de la valeur d'élément de qualité d'image de la première image décodée et de la valeur d'élément de qualité d'image de la deuxième image décodée, et à stocker au moins l'un parmi le paramètre défini pour l'unité de capture d'image (103), le paramètre défini pour l'unité de traitement d'image (104) et le paramètre défini pour l'unité de codage (105) dans l'unité de stockage (101) lorsque le niveau de similitude de qualité d'image jugé est supérieur ou égal à une valeur de seuil prédéterminée ;
une unité de rétroaction (112) qui, lorsque le niveau de similitude de qualité d'image est inférieur à la valeur de seuil, calcule des paramètres à définir pour l'unité de capture d'image (103), l'unité de traitement d'image (104) et l'unité de codage (105) sur la base de la valeur d'élément de qualité d'image de la première image décodée et de la valeur d'élément de qualité d'image de la deuxième image décodée afin d'augmenter le niveau de similitude de qualité d'image jugé, et définit les paramètres calculés pour l'unité de capture d'image (103), l'unité de traitement d'image (104) et l'unité de codage (105) ; et
une unité de définition (116) qui définit le paramètre stocké dans l'unité de stockage (101) pour au moins l'une parmi l'unité de capture d'image (103), l'unité de traitement d'image (104) et l'unité de codage (105) lorsque le dispositif de capture d'image (100) est en mode normal.

2. Dispositif de capture d'image selon la revendication 1, comprenant en outre :
une unité de génération (106) qui génère des informations pertinentes d'image qui sont des informations concernant l'image générée par au moins l'une parmi l'unité de capture d'image (103), l'unité de traitement d'image (104) et l'unité de codage (105) lorsque le dispositif de capture d'image (100) est en mode de réglage, en exécutant un processus ; et
une unité d'identification (115), dans laquelle
chaque fois que l'unité d'acquisition (107) acquiert la deuxième image codée lorsque le dispositif de capture d'image (100) est en mode de réglage, l'unité d'exécution de processus (10) exécute le processus de décodage, le processus d'extraction et un processus de stockage de jugement consistant à stocker au moins l'un parmi le paramètre défini pour l'unité de capture d'image (103), le paramètre défini pour l'unité de traitement d'image (104) et le paramètre défini pour l'unité de codage (105), et les informations pertinentes d'image générées lorsque le dispositif de capture d'image (100) est en mode de réglage, dans l'unité de stockage (101), tout en les associant mutuellement lorsque le niveau de similitude de qualité d'image jugé est supérieur ou égal à la valeur de seuil ;
l'unité de génération (106) génère des informations pertinentes d'image pour une image générée par au moins l'une parmi l'unité de capture d'image (103), l'unité de traitement d'image (104) et l'unité de codage (105) lorsque le dispositif de capture d'image (100) est en mode normal ;
lorsque le dispositif de capture d'image (100) est en mode normal, l'unité d'identification (115) identifie des informations pertinentes d'image incluses dans les informations pertinentes d'image stockées dans l'unité de stockage (101) et coïncidant avec ou similaires aux informations pertinentes d'image générées lorsque le dispositif de capture d'image (100) est en mode normal ; et
lorsque le dispositif de capture d'image (100) est en mode normal, l'unité de définition (116) définit un ou plusieurs paramètres correspondant aux informations pertinentes d'image identifiées pour au moins l'une parmi l'unité de capture d'image (103), l'unité de traitement d'image (104) et l'unité de codage (105).

3. Dispositif de capture d'image selon l'une quelconque des revendications 1 à 2, dans lequel l'unité d'exécution de processus (10) :
exécute un processus de correction consistant à corriger une erreur d'angle de champ entre la première image décodée et la deuxième image décodée ;
exécute un processus d'extraction consistant à extraire la valeur d'élément de qualité d'image d'une première image corrigée décodée sur la base de la première image corrigée décodée, qui est une image obtenue en corrigeant la première image décodée et en extrayant la valeur d'élément de qualité d'image d'une deuxième image corrigée décodée sur la base de la deuxième image corrigée décodée, qui est une image obtenue en corrigeant la deuxième image décodée ; et
exécute un processus de stockage de jugement consistant à juger un niveau de similitude de qualité d'image, qui est un niveau de similitude entre la qualité d'image de la première image corrigée décodée et la qualité d'image de la deuxième image corrigée décodée, le niveau de similitude de qualité d'image étant jugé sur la base de la valeur d'élément de qualité d'image de la première image corrigée décodée et de la valeur d'élément de qualité d'image de la deuxième image corrigée décodée, et à stocker au moins l'un parmi le paramètre défini pour l'unité de capture d'image (103), le paramètre défini pour l'unité de traitement d'image (104) et le paramètre défini pour l'unité de codage (105) dans l'unité de stockage (101) lorsque le niveau de similitude de qualité d'image jugé est supérieur ou égal à la valeur de seuil.

4. Dispositif de capture d'image selon l'une quelconque des revendications 1 à 2, dans lequel l'unité d'exécution de processus (10) :
exécute un processus de correction consistant à corriger une erreur d'angle de champ entre la première image décodée et la deuxième image décodée ;
exécute un processus d'extraction consistant à extraire la valeur d'élément de qualité d'image d'une première image corrigée décodée sur la base de la première image corrigée décodée, qui est une image obtenue en corrigeant la première image décodée et en extrayant la valeur d'élément de qualité d'image de la deuxième image décodée sur la base de la deuxième image décodée ; et
exécute un processus de stockage de jugement consistant à juger un niveau de similitude de qualité d'image, qui est un niveau de similitude entre la qualité d'image de la première image corrigée décodée et la qualité d'image de la deuxième image décodée, le niveau de similitude de qualité d'image étant jugé sur la base de la valeur d'élément de qualité d'image de la première image corrigée décodée et de la valeur d'élément de qualité d'image de la deuxième image décodée, et à stocker au moins l'un parmi le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image jugé est supérieur ou égal à la valeur de seuil.

5. Dispositif de capture d'image selon l'une quelconque des revendications 1 à 2, dans lequel l'unité d'exécution de processus (10) :
exécute un processus de correction consistant à corriger une erreur d'angle de champ entre la première image décodée et la deuxième image décodée ;
exécute un processus d'extraction consistant à extraire la valeur d'élément de qualité d'image de la première image décodée sur la base de la première image décodée, et à extraire la valeur d'élément de qualité d'image d'une deuxième image corrigée décodée, qui est une image obtenue en corrigeant la deuxième image décodée sur la base de la deuxième image corrigée décodée ; et
exécute un processus de stockage de jugement consistant à juger un niveau de similitude de qualité d'image, qui est un niveau de similitude entre la qualité d'image de la première image décodée et la qualité d'image de la deuxième image corrigée décodée, le niveau de similitude de qualité d'image étant jugé sur la base de la valeur d'élément de qualité d'image de la première image décodée et de la valeur d'élément de qualité d'image de la deuxième image corrigée décodée, et à stocker au moins l'un parmi le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image jugé est supérieur ou égal à la valeur de seuil.

6. Dispositif de capture d'image selon l'une quelconque des revendications 1 à 5, dans lequel :
lorsque le dispositif de capture d'image (100) est en mode de réglage, l'unité d'exécution de processus (10) stocke le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image est supérieur ou égal à la valeur de seuil ; et
lorsque le dispositif de capture d'image (100) est en mode normal, l'unité de définition (116) définit les paramètres stockés dans l'unité de stockage (101) pour l'unité de capture d'image (103), l'unité de traitement d'image (104) et l'unité de codage (105).

7. Dispositif de capture d'image selon l'une quelconque des revendications 1 à 6, dans lequel la valeur d'élément de qualité d'image est au moins l'une parmi une luminosité, une saturation, une netteté et une quantité de bruit.

8. Dispositif de conversion de qualité d'image (400) pouvant être connecté à un premier dispositif de capture d'image (200) qui a été réglé de manière à générer des images de haute qualité d'image, et à un deuxième dispositif de capture d'image (500) qui n'a pas été réglé, le dispositif de conversion de qualité d'image (400) comprenant :
une unité de stockage (401) ;
une unité d'acquisition (406) qui acquiert une deuxième image codée en tant qu'image codée transmise par le premier dispositif de capture d'image (200) et acquiert une image obtenue par une capture d'image par le deuxième dispositif de capture d'image (500) lorsque le dispositif de conversion de qualité d'image (400) est en mode de réglage ;
une unité de traitement d'image (403) qui corrige l'image obtenue par la capture d'image par le deuxième dispositif de capture d'image (500) sur la base d'un paramètre qui a été défini ;
une unité de codage (404) qui code l'image corrigée sur la base d'un paramètre qui a été défini pour fournir une première image codée ;
une unité d'exécution de processus (20) qui exécute :
un processus de décodage consistant à décoder la première image codée pour fournir une première image décodée, et à décoder la deuxième image codée pour fournir une deuxième image décodée ;
un processus d'extraction consistant à extraire une valeur d'élément de qualité d'image, qui est une valeur concernant une qualité d'image, de la première image décodée et à extraire la valeur d'élément de qualité d'image de la deuxième image décodée ; et
un processus de stockage de jugement consistant à juger un niveau de similitude de qualité d'image, qui est un niveau de similitude entre la qualité d'image de la première image décodée et la qualité d'image de la deuxième image décodée, le niveau de similitude de qualité d'image étant jugé sur la base de la valeur d'élément de qualité d'image de la première image décodée et de la valeur d'élément de qualité d'image de la deuxième image décodée, et à stocker au moins l'un parmi le paramètre défini pour l'unité de traitement d'image (403) et le paramètre défini de l'unité de codage (404), dans l'unité de stockage (401), lorsque le niveau de similitude de qualité d'image jugé est supérieur ou égal à une valeur de seuil prédéterminée ;
une unité de rétroaction (411) qui, lorsque le niveau de similitude de qualité d'image est inférieur à la valeur de seuil, calcule des paramètres à définir pour l'unité de traitement d'image (403) et l'unité de codage (404) sur la base de la valeur d'élément de qualité d'image de la première image décodée et de la valeur d'élément de qualité d'image de la deuxième image décodée afin d'augmenter le niveau de similitude de qualité d'image jugé, et définit les paramètres calculés pour l'unité de traitement d'image (403) et l'unité de codage (404) ; et
une unité de définition (415) qui définit le paramètre stocké dans l'unité de stockage (401) pour au moins l'une parmi l'unité de traitement d'image (403) et l'unité de codage (404) lorsque le dispositif de conversion de qualité d'image (400) est en mode normal.

9. Dispositif de conversion de qualité d'image selon la revendication 8, comprenant en outre :
une unité de génération (405) qui génère des informations pertinentes d'image, qui sont des informations concernant l'image générée par au moins l'une parmi l'unité de traitement d'image (403) et l'unité de codage (404), lorsque le dispositif de conversion de qualité d'image (400) est en mode de réglage, en exécutant un processus ; et
une unité d'identification (414), dans laquelle
chaque fois que l'unité d'acquisition (406) acquiert l'image obtenue par la capture d'image par le deuxième dispositif de capture d'image (500) et la deuxième image codée lorsque le dispositif de conversion de qualité d'image (400) est en mode de réglage, l'unité d'exécution de processus (20) en mode de réglage exécute le processus de décodage, le processus d'extraction et un processus de stockage de jugement consistant à stocker au moins l'un parmi le paramètre défini pour l'unité de traitement d'image (403) et le paramètre défini pour l'unité de codage (404), et les informations pertinentes d'image générées lorsque le dispositif de conversion de qualité d'image (400) est en mode de réglage, dans l'unité de stockage (401), tout en les associant mutuellement lorsque le niveau de similitude de qualité d'image jugé est supérieur ou égal à la valeur de seuil ;
l'unité de génération (405) génère les informations pertinentes d'image pour une image générée par au moins l'une parmi l'unité de traitement d'image (403) et l'unité de codage (404) lorsque le dispositif de conversion de qualité d'image (400) est en mode normal ;
lorsque le dispositif de conversion de qualité d'image (400) est en mode normal, l'unité d'identification (414) identifie les informations pertinentes d'image incluses dans les informations pertinentes d'image stockées dans l'unité de stockage (401) et coïncidant avec ou similaires aux informations pertinentes d'image générées en mode normal ; et
lorsque le dispositif de conversion de qualité d'image (400) est en mode normal, l'unité de définition (415) définit un ou plusieurs paramètres correspondant aux informations pertinentes d'image identifiées pour au moins l'une parmi l'unité de traitement d'image (403) et l'unité de codage (404).

10. Système de conversion de qualité d'image, comprenant :
un premier dispositif de capture d'image (200) ;
un deuxième dispositif de capture d'image (100a) ; et
un dispositif de traitement d'informations (300a), dans lequel
le deuxième dispositif de capture d'image (100a) comprend une unité de stockage (101), une unité de capture d'image (103) qui exécute une capture d'image sur la base d'un paramètre qui a été défini, une unité de traitement d'image (104) qui corrige une image obtenue par la capture d'image par l'unité de capture d'image (103) sur la base d'un paramètre qui a été défini, et une unité de codage (105) qui code l'image corrigée sur la base d'un paramètre qui a été défini ;
le deuxième dispositif de capture d'image (100a), lorsqu'il est en mode de réglage, transmet une première image codée en tant que l'image codée par l'unité de codage (105), au dispositif de traitement d'informations (300a) ;
le dispositif de traitement d'informations (300a) reçoit la première image codée en provenance du deuxième dispositif de capture d'image (100a), reçoit une deuxième image codée en tant qu'une image codée, en provenance du premier dispositif de capture d'image (200), et exécute
un processus de décodage consistant à décoder la première image codée pour fournir une première image décodée, et à décoder la deuxième image codée pour fournir une deuxième image décodée ;
un processus d'extraction consistant à extraire une valeur d'élément de qualité d'image, qui est une valeur concernant une qualité d'image, de la première image décodée et à extraire la valeur d'élément de qualité d'image de la deuxième image décodée ; et
un processus de commande de jugement consistant à juger un niveau de similitude de qualité d'image, qui est un niveau de similitude entre la qualité d'image de la première image décodée et la qualité d'image de la deuxième image décodée, le niveau de similitude de qualité d'image étant jugé sur la base de la valeur d'élément de qualité d'image de la première image décodée et de la valeur d'élément de qualité d'image de la deuxième image décodée, et à commander au deuxième dispositif de capture d'image (100a) de stocker au moins l'un parmi le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image jugé est supérieur ou égal à une valeur de seuil prédéterminée ; et
un processus de rétroaction consistant à calculer les paramètres à définir pour l'unité de capture d'image (103), l'unité de traitement d'image (104) et l'unité de codage (105), sur la base de la valeur d'élément de qualité d'image de la première image décodée et de la valeur d'élément de qualité d'image de la deuxième image décodée, afin d'augmenter le niveau de similitude de qualité d'image jugé lorsque le niveau de similitude de qualité d'image jugé est inférieur à la valeur de seuil prédéterminée ;
le deuxième dispositif de capture d'image (100a), qui reçoit la commande lorsque le deuxième dispositif de capture d'image (100a) est en mode de réglage, stocke au moins l'un parmi le paramètre défini pour l'unité de capture d'image (103), le paramètre défini pour l'unité de traitement d'image (104) et le paramètre défini pour l'unité de codage (105), dans l'unité de stockage ; et
lorsque le deuxième dispositif de capture d'image (100a) est en mode normal, le deuxième dispositif de capture d'image (100a) définit le paramètre stocké dans l'unité de stockage (101) pour au moins l'une parmi l'unité de capture d'image (103), l'unité de traitement d'image (104) et l'unité de codage (105).

11. Système de conversion de qualité d'image selon la revendication 10, dans lequel :
le deuxième dispositif de capture d'image (100a) génère des informations pertinentes d'image, qui sont des informations concernant l'image générée par au moins l'une parmi l'unité de capture d'image (103), l'unité de traitement d'image (104) et l'unité de codage (105), lorsque le deuxième dispositif de capture d'image (100a) est en mode de réglage, en exécutant un processus ;
chaque fois que la première image codée et la deuxième image codée sont reçues, le dispositif de traitement d'informations (300a) exécute le processus de décodage, le processus d'extraction et un processus de commande de jugement consistant à commander au deuxième dispositif de capture d'image (100a) de stocker au moins l'un parmi le paramètre défini pour l'unité de capture d'image (103), le paramètre défini pour l'unité de traitement d'image (104) et le paramètre défini pour l'unité de codage (105), et les informations pertinentes d'image générées lorsque le deuxième dispositif de capture d'image (100a) est en mode de réglage, dans l'unité de stockage (101), tout en les associant mutuellement lorsque le niveau de similitude de qualité d'image jugé est supérieur ou égal à la valeur de seuil ;
le deuxième dispositif de capture d'image (100a) qui reçoit la commande lorsque le deuxième dispositif de capture d'image (100a) est en mode de réglage, stocke au moins l'un parmi le paramètre défini pour l'unité de capture d'image (103), le paramètre défini pour l'unité de traitement d'image (104) et le paramètre défini pour l'unité de codage (105), et les informations pertinentes d'image générées lorsque le deuxième dispositif de capture d'image (100a) est en mode de réglage, dans l'unité de stockage (101), tout en les associant mutuellement ; et
le deuxième dispositif de capture d'image (100a) génère des informations pertinentes d'image pour une image générée par au moins l'une parmi l'unité de capture d'image (103), l'unité de traitement d'image (104) et l'unité de codage (105), lorsque le deuxième dispositif de capture d'image (100a) est en mode normal, identifie des informations pertinentes d'image incluses dans les informations pertinentes d'image stockées dans l'unité de stockage (101) et coïncidant avec ou similaires aux informations pertinentes d'image générées lorsque le deuxième dispositif de capture d'image (100a) est en mode normal, et définit un ou plusieurs paramètres correspondant aux informations pertinentes d'image identifiées pour au moins l'une parmi l'unité de capture d'image (103), l'unité de traitement d'image (104) et l'unité de codage (105).

12. Système de conversion de qualité d'image selon la revendication 10 ou 11, dans lequel le dispositif de traitement d'informations (300a) :
exécute un processus de correction consistant à corriger une erreur d'angle de champ entre la première image décodée et la deuxième image décodée ;
exécute un processus d'extraction consistant à extraire la valeur d'élément de qualité d'image d'une première image corrigée décodée sur la base de la première image corrigée décodée, qui est une image obtenue en corrigeant la première image décodée et en extrayant la valeur d'élément de qualité d'image d'une deuxième image corrigée décodée sur la base de la deuxième image corrigée décodée, qui est une image obtenue en corrigeant la deuxième image décodée ; et
exécute un processus de commande de jugement consistant à juger un niveau de similitude de qualité d'image qui est un niveau de similitude entre la qualité d'image de la première image corrigée décodée et la qualité d'image de la deuxième image corrigée décodée, le niveau de similitude de qualité d'image étant jugé sur la base de la valeur d'élément de qualité d'image de la première image corrigée décodée et de la valeur d'élément de qualité d'image de la deuxième image corrigée décodée, et à commander au deuxième dispositif de capture d'image (100a) de stocker au moins l'un parmi le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image jugé est supérieur ou égal à la valeur de seuil.

13. Système de conversion de qualité d'image selon la revendication 10 ou 11, dans lequel le dispositif de traitement d'informations (300a) :
exécute un processus de correction consistant à corriger une erreur d'angle de champ entre la première image décodée et la deuxième image décodée ;
exécute un processus d'extraction consistant à extraire la valeur d'élément de qualité d'image d'une première image corrigée décodée sur la base de la première image corrigée décodée, qui est une image obtenue en corrigeant la première image décodée, et la valeur d'élément de qualité d'image de la deuxième image décodée sur la base de la deuxième image décodée ; et
exécute un processus de commande de jugement consistant à juger un niveau de similitude de qualité d'image, en tant qu'un niveau de similitude entre la qualité d'image de la première image corrigée décodée et la qualité d'image de la deuxième image décodée, le niveau de similitude de qualité d'image étant jugé sur la base de la valeur d'élément de qualité d'image de la première image corrigée décodée et de la valeur d'élément de qualité d'image de la deuxième image décodée, et à commander au deuxième dispositif de capture d'image (100a) de stocker au moins l'un parmi le paramètre défini pour l'unité de capture d'image (103), le paramètre défini pour l'unité de traitement d'image (104) et le paramètre défini pour l'unité de codage (105), dans l'unité de stockage (101), lorsque le niveau de similitude de qualité d'image jugé est supérieur ou égal à la valeur de seuil.

14. Système de conversion de qualité d'image selon la revendication 10 ou 11, dans lequel le dispositif de traitement d'informations (300a) :
exécute un processus de correction consistant à corriger une erreur d'angle de champ entre la première image décodée et la deuxième image décodée ;
exécute un processus d'extraction consistant à extraire la valeur d'élément de qualité d'image de la première image décodée sur la base de la première image décodée, et à extraire la valeur d'élément de qualité d'image d'une deuxième image corrigée décodée sur la base de la deuxième image corrigée décodée, qui est une image obtenue en corrigeant la deuxième image décodée ; et
exécute un processus de commande de jugement consistant à juger un niveau de similitude de qualité d'image, qui est un niveau de similitude entre la qualité d'image de la première image décodée et la qualité d'image de la deuxième image corrigée décodée, le niveau de similitude de qualité d'image étant jugé sur la base de la valeur d'élément de qualité d'image de la première image décodée et de la valeur d'élément de qualité d'image de la deuxième image corrigée décodée, et à commander au deuxième dispositif de capture d'image (100a) de stocker au moins l'un parmi le paramètre définit pour l'unité de capture d'image (103), le paramètre définit pour l'unité de traitement d'image (104) et le paramètre définit pour l'unité de codage (105), dans l'unité de stockage (101), lorsque le niveau de similitude de qualité d'image jugé est supérieur ou égal à la valeur de seuil.
